# EUROPÄISCHE PATENTSCHRIFT

(11) **EP 3 884 738 B1**
(45) Veröffentlichungstag und Bekanntmachung des Hinweises auf die Patenterteilung: **05.03.2025**
(21) Anmeldenummer: 19828632.0
(22) Anmeldetag: 12.12.2019
(51) Int. Cl.: H05B 45/12, H05B 45/18, H05B 47/17

(54) **BELEUCHTUNGSSYSTEM MIT ENERGIESPAR-MODUS UND VERFAHREN ZUR OPTIMIERUNG DER GESAMTEFFIZIENZ DES BELEUCHTUNGSSYSTEMS**
LIGHTING SYSTEM WITH AN ENERGY-SAVING MODE, AND METHOD FOR OPTIMIZING THE OVERALL EFFICIENCY OF THE LIGHTING SYSTEM
SYSTÈME D'ÉCLAIRAGE PRÉSENTANT UN MODE D'ÉCONOMIE D'ÉNERGIE ET PROCÉDÉ D'OPTIMISATION DE L'EFFICACITÉ GLOBALE DU SYSTÈME D'ÉCLAIRAGE

(30) Priorität: 03.01.2019 DE 102019100058
(43) Veröffentlichungstag der Anmeldung: 29.09.2021
(73) Patentinhaber: Tridonic GmbH & Co. KG, 6851 Dornbirn (AT)
(72) Erfinder: KUCERA, Clemens, 6700 Bludenz (AT); NETZER, Harald, 6710 Nenzing (AT)
(74) Vertreter: Rupp, Christian
(86) Internationale Anmeldenummer: PCT/EP2019/084977
(87) Internationale Veröffentlichungsnummer: WO 2020/141055

(56) Entgegenhaltungen:
- WO-A2-2017/183979
- DE-A1- 102011 084 590
- US-A1- 2009 160 364
- US-A1- 2017 325 306

## Beschreibung

### 1. Gebiet der Erfindung

Die vorliegende Erfindung betrifft ein Verfahren zum Betrieb eines Leuchtmittel-Konverters für wenigstens ein Leuchtmittel-Modul, insbesondere wenigstens ein Leuchtdioden-Modul, an einem Arbeitspunkt einer die Lichtleistung beeinflussenden Betriebsgröße für einen Dimmpegel; sowie ein Beleuchtungssystem mit einem Leuchtmittel-Konverter und wenigstens einem durch den Leuchtmittel-Konverter betriebenen Leuchtmittel-Modul, bei dem in einem Energiespar-Modus das erfindungsgemäße Verfahren ausgeführt werden kann.

### 2. Hintergrund

Aus dem Stand der Technik sind Beleuchtungssysteme mit einem Leuchtmittel-Konverter und wenigstens einem Leuchtmittel-Modul bekannt. Der Leuchtmittel-Konverter ist dazu eingerichtet, das wenigstens eine Leuchtmittel-Modul mit einer die Lichtleistung beeinflussenden Betriebsgröße zu versorgen und somit die durch das Leuchtmittel-Modul abgegebene Lichtleistung bzw. die Menge des durch das Leuchtmittel-Modul abgegebenen Lichts zu steuern. Die die Lichtleistung beeinflussende Betriebsgröße kann eine Spannung, ein Strom oder elektrische Energie sein.

Folglich ist der Leuchtmittel-Konverter dazu eingerichtet, das durch das wenigstens eine Leuchtmittel-Modul abgegebene Licht bzw. die Helligkeit des Leuchtmittel-Moduls durch Änderung der die Lichtleistung beeinflussenden Betriebsgröße zu dimmen. Zum Beispiel, wenn das wenigstens eine Leuchtmittel-Modul ein Leuchtdioden-Modul (LED-Modul) mit wenigstens einer Leuchtdiode (LED) ist und die die Lichtleistung beeinflussende Betriebsgröße der dem Leuchtdioden-Modul zugeführte Leuchtmittel-Strom ist, dann kann das durch das Leuchtdioden-Modul abgegebene Licht bzw. die Helligkeit des Leuchtdioden-Moduls gedimmt bzw. verkleinert werden, indem der Leuchtmittel-Strom verkleinert wird. Je größer der durch den Leuchtmittel-Konverter dem Leuchtdioden-Modul zugeführte Leuchtmittel-Strom ist, desto größer ist der Dimmpegel, d.h. desto größer ist die durch das Leuchtdioden-Modul abgegebene Lichtleistung bzw. Menge an Licht. Entsprechend gilt, je kleiner der Leuchtmittel-Strom ist, desto kleiner ist der Dimmpegel, d.h. desto kleiner ist die durch das Leuchtdioden-Modul abgegebene Lichtleistung bzw. Menge an Licht.

Folglich, um einen Dimmpegel des durch das Leuchtmittel-Modul abgegebenen Lichts bzw. der Helligkeit des Leuchtmittel-Moduls zu erreichen, stellt der Leuchtmittel-Konverter die die Lichtleistung beeinflussende Betriebsgröße, wie z.B. den Leuchtmittel-Strom, entsprechend ein und betreibt das Leuchtmittel-Modul mit dieser eingestellten Betriebsgröße. Der Leuchtmittel-Konverter wird also an einem Arbeitspunkt einer die Lichtleistung beeinflussenden Betriebsgröße für den Dimmpegel, der erreicht werden soll, betrieben.

In einer Bestrebung den Betrieb vorstehend genannter Beleuchtungssysteme umweltfreundlicher sowie kostengünstiger zu gestalten, ist es eine Aufgabe der vorliegenden Erfindung ein Verfahren für einen Energiespar-Modus des Beleuchtungssystems bereitzustellen, in dem die Effizienz bzw. der Wirkungsgrad des Beleuchtungssystems verbessert wird. Unter der Effizienz des Beleuchtungssystems wird insbesondere das Verhältnis zwischen der Menge an Licht, die durch das Leuchtmittel-Modul beim Betrieb des Leuchtmittel-Moduls gemäß einem Dimmpegel ausgegeben wird, und der elektrischen Leistung verstanden, die durch den Leuchtmittel-Konverter zum Betrieb des Leuchtmittel-Moduls gemäß dem Dimmpegel aufgenommenen wird.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

Die Druckschrift WO 2017/183979 A2 offenbart einen Leuchtmittel-Konverter, dessen Ansteuerverfahren in Abhängigkeit von einer Gewichtung bzw. Priorisierung zwischen (Gesamt-)Effizienz einerseits und Genauigkeit der Lichtwiedergabe andererseits bestimmt wird.

Die Druckschrift US 2017/325306 A1 offenbart einen Leuchtmittel-Konverter mit einem linearen Regler und einer Kompensationseinheit in Reihe mit einem Leuchtmittel-Modul. Dabei kompensiert die Kompensationseinheit am Eingang des linearen Reglers einen Teil der Eingangsspannung des linearen Reglers, was dessen immanente Verluste minimiert bzw. dessen Effizienz optimiert.

Die Druckschrift US 2009/160364 A1 offenbart einen mittels Amplitudenmodulation und Pulsweitenmodulation dimmbaren Leuchtmittel-Konverter. Die Effizienz der Umsetzung der Eingangsleistung in einen Lichtstrom des Leuchtmittel-Moduls weist ein Optimum auf und sinkt zu beiden Seiten des Optimums, d.h. für größere und kleinere Eingangsleistungen. Bei den kleineren Eingangsleistungen kommt neben der Amplitudenmodulation die Pulsweitenmodulation zum Einsatz, um den Leuchtmittel-Konverter dennoch in dem Effizienzoptimum für das Leuchtmittel-Modul betreiben zu können.

### 3. Ausführliche Beschreibung der Erfindung

Gemäß der vorliegenden Erfindung wird ein Verfahren zum Betrieb eines Leuchtmittel-Konverters für wenigstens ein Leuchtmittel-Modul, insbesondere wenigstens ein Leuchtdioden-Modul, an einem Arbeitspunkt einer die Lichtleistung beeinflussenden Betriebsgröße für einen Dimmpegel bereitgestellt, wobei der Leuchtmittel-Konverter und das wenigstens eine Leuchtmittel-Modul ein Beleuchtungssystem bilden. Das Verfahren weist die folgenden Schritte auf:
- Bestimmen für den Dimmpegel einen ersten Effizienzwert des wenigstens einen Leuchtmittel-Moduls,
- Bestimmen für den Dimmpegel einen zweiten Effizienzwert des Leuchtmittel-Konverters, und
- Auswerten eines hinsichtlich der Gesamteffizienz des Beleuchtungssystems optimierten Dimmpegels innerhalb eines Korridors für den Dimmpegel auf der Basis des ersten Effizienzwertes und des zweiten Effizienzwertes für einen hinsichtlich der Gesamteffizienz des Beleuchtungssystems optimierten Arbeitspunkt der die Lichtleistung beeinflussenden Betriebsgröße, an dem der Leuchtmittel-Konverter das wenigstens eine Leuchtmittel-Modul mit dem optimierten Dimmpegel betreibt.

Mit anderen Worten schlägt die vorliegende Erfindung vor, beim Vorliegen eines Dimmpegels, gemäß dem der Leuchtmittel-Konverter das wenigstens eine Leuchtmittel-Modul betreiben soll, die Effizienz des wenigstens einen Leuchtmittel-Moduls (erster Effizienzwert) und die Effizienz des Leuchtmittel-Konverters (zweiter Effizienzwert) beim Betrieb des Leuchtmittel-Konverters mit dem vorliegenden Dimmpegel zu bestimmen, um dann auf der Basis dieser zwei Effizienzwerte einen optimierten Dimmpegel innerhalb eines Korridors für den vorliegenden Dimmpegel auszuwerten. Der optimierte Dimmpegel ist hierbei hinsichtlich der Gesamteffizienz des Beleuchtungssystems optimiert.

Erfindungsgemäß wird insbesondere vorgeschlagen, beim Vorliegen eines Dimmpegels, gemäß dem der Leuchtmittel-Konverter das wenigstens eine Leuchtmittel-Modul betreiben soll (um eine dem vorliegende Dimmpegel entsprechende durch das wenigstens eine Leuchtmittel-Modul ausgegebene Lichtleistung zu erreichen), einen Dimmpegel (optimierten Dimmpegel) auszuwerten bzw. zu ermitteln, bei dem die Lichtleistung im Vergleich zu der dem vorliegenden Dimmpegel entsprechenden Lichtleistung zwar geändert ist, dafür aber die Gesamteffizienz des Beleuchtungssystem im Vergleich zu der dem vorliegenden Dimmpegel entsprechenden Gesamteffizienz des Beleuchtungssystems verbessert ist.

Damit eine Änderung, insbesondere eine Verringerung, der Lichtleistung aufgrund der Optimierung des Dimmpegels hinsichtlich der Gesamteffizienz des Beleuchtungssystems vernachlässigt werden kann, ist der Korridor für den vorliegenden Dimmpegel vorgegeben, innerhalb dessen der optimierte Dimmpegel liegen darf.

Somit ist das erfindungsgemäße Verfahren vorteilhaft, da durch das Verfahren die Gesamteffizienz des Beleuchtungssystems verbessert werden kann, ohne dass dies einen nicht tolerierbaren Einfluss auf die Lichtabgabe durch das wenigstens eine Leuchtmittel-Modul hat. Hierdurch wird die dem System zugeführte elektrisch Energie bzw. Leistung effizienter in eine durch das System ausgegebene Lichtleistung umgesetzt, sodass das Beleuchtungssystem umweltfreundlicher und kostengünstiger ist.

Unter dem Begriff "*Lichtleistung*" versteht man die Leistung bzw. Energie, die durch das wenigstens eine Leuchtmittel-Modul in Form von Licht ausgegeben wird, wenn das wenigstens eine Leuchtmittel-Modul mit der die Lichtleistung beeinflussenden Betriebsgröße elektrisch versorgt wird. Mit anderen Worten entspricht die Lichtleistung des wenigstens einen Leuchtmittel-Moduls insbesondere der Menge des durch das wenigstens eine Leuchtmittel-Modul abgegebenen Lichts. Ein Maß für die Lichtleistung des Leuchtmittel-Moduls kann zum Beispiel der durch das Leuchtmittel-Modul abgegebene Lichtstrom, die Beleuchtungsstärke des Leuchtmittel-Moduls, die durch das Leuchtmittel-Modul abgegebene Lichtmenge usw. sein. Folglich je größer die durch das Leuchtmittel-Modul abgegebene Lichtleistung desto größer ist der durch das Leuchtmittel-Modul abgegebene Lichtstrom, die abgegebene Beleuchtungsstärke und die abgegebene Lichtmenge. Je kleiner die durch das Leuchtmittel-Modul abgegebene Lichtleistung desto kleiner ist der durch das Leuchtmittel-Modul abgegebene Lichtstrom, die abgegebene Beleuchtungsstärke und die abgegebene Lichtmenge.

Unter dem Begriff "*eine die Lichtleistung beeinflussende Betriebsgröße*" wird eine elektrische Größe verstanden, mit der das wenigstens eine Leuchtmittel-Modul elektrisch versorgt werden kann und mit der die Lichtabgabe des wenigstens einen Leuchtmittel-Moduls und folglich die Lichtleistung des wenigstens einen Leuchtmittel-Moduls gesteuert bzw. eingestellt werden kann. Die die Lichtleistung beeinflussende Betriebsgröße ist insbesondere die elektrische Energie, die Leuchtmittel-Spannung oder der Leuchtmittel-Strom, die/der durch den Leuchtmittel-Konverter dem wenigstens einen Leuchtmittel-Modul zugeführt wird, um das Leuchtmittel-Modul gemäß einem Dimmpegel zu betreiben. Mit anderen Worten kann durch die die Lichtleistung beeinflussenden Betriebsgröße die durch das wenigstens eine Leuchtmittel-Modul abgegebene Lichtleistung derart eingestellt werden, das diese einem Dimmpegel entspricht.

Unter dem Begriff "*Arbeitspunkt einer die Lichtleistung beeinflussenden Beriebsgröße*" versteht man folglich insbesondere den Arbeitspunkt bzw. Betriebszustand des Leuchtmittel-Konverters, an dem der Leuchtmittel-Konverter dem wenigstens einen Leuchtmittel-Modul einen entsprechenden Wert der die Lichtleistung beeinflussenden Betriebsgröße zuführt.

Unter dem Begriff "*Dimmpegel*" versteht man ein Maß bzw. Grad der Dimmung des durch das wenigstens eine Leuchtmittel-Modul abgegebenen Lichts bzw. der Helligkeit des wenigstens einen Leuchtmittel-Moduls. Als Synonym kann auch der Begriff "*Dimmniveau*" verwendet werden. Je größer der Dimmpegel ist, desto größer ist die durch das Leuchtdioden-Modul abgegebene Lichtleistung. Entsprechend gilt, je kleiner der Dimmpegel ist, desto kleiner ist die durch das Leuchtdioden-Modul abgegebene Lichtleistung. Der Dimmpegel kann ein Wert in Prozent zwischen 100% und 0% sein, wobei insbesondere ein Dimmpegel von 100% der maximalen Lichtleistung des wenigstens einen Leuchtdioden-Moduls entspricht; und entsprechend ein Dimmpegel von 0% der minimalen Lichtleistung des wenigstens einen Leuchtdioden-Moduls entspricht.

Der Leuchtmittel-Konverter ist insbesondere dazu eingerichtet, das wenigstens eine Leuchtmittel-Modul elektrisch zu versorgen und dadurch die Lichtabgabe des wenigstens einen Leuchtmittel-Moduls gemäß einem Dimmpegel zu steuern. Insbesondere ist der Leuchtmittel-Konverter dazu eingerichtet, dem wenigstens einen Leuchtmittel-Modul eine die Lichtleistung beeinflussende Betriebsgröße, wie z.B. einen Leuchtmittel-Strom, zuzuführen, um die durch das wenigstens eine Leuchtmittel-Modul abgegebene Lichtleistung bzw. die Helligkeit des Leuchtmittel-Moduls durch Änderung der die Lichtleistung beeinflussenden Betriebsgröße gemäß einem Dimmpegel zu steuern.

Der Leuchtmittel-Konverter kann wenigstens einen Schaltregler bzw. aktiv getakteten DC/DC-Konverter mit wenigstens einem Schalter und wenigstens einem elektrischen Speicher, wie z.B. einer Induktivität bzw. Drossel, umfassen oder einem solchen entsprechen. Durch Taktung des wenigstens einen Schalters und dem dadurch verursachten Laden und Entladen des wenigstens einen Energiespeichers (Induktivität bzw. Drossel) kann der aktiv getaktete DC/DC-Konverter eine Eingangsspannung in eine kleinere oder größere Ausgangsspannung (abhängig von der Art des DC-DC-Konverters) wandeln und dadurch eine die Lichtleistung beeinflussende Betriebsgröße, wie z.B. einen Leuchtmittel-Strom, bereitstellen.

Ein "*aktiv getakteter DC*/*DC-Konverter*" kann auch als "*aktiv getakteter Gleichspannungswandler*" bzw. "*aktiv getakteter DC*/*DC-Wandler*" bezeichnet werden. Beispiele für einen aktiv getakteten DC/DC-Konverter sind ein Abwärtswandler (auch "*Tiefsetzsteller*" oder "*Buck-Konverter*" genannt); ein Aufwärtswandler (auch "*Hochsetzsteller*" oder "*Boost-Konverter*" genannt); ein Sperrwandler (auch "*Flyback-Konverter*" genannt), ein Resonanzwandler usw.

Der Leuchtmittel-Konverter ist aber nicht auf aktiv getaktete DC/DC-Konverter beschränkt, sodass auch jeder andere dem Fachmann bekannte Leuchtmittel-Konverter verwendet werden kann.

Das Leuchtmittel-Modul weist wenigstens ein Leuchtmittel auf bzw. entspricht einem solchen. Das Leuchtmittel-Modul kann durch den Leuchtmittel-Konverter elektrisch versorgt werden. Wenn das Leuchtmittel-Modul mehr als ein Leuchtmittel aufweist bzw. mehreren Leuchtmitteln entspricht, dann können die mehreren Leuchtmittel miteinander parallel und/oder in Reihe elektrisch verbunden werden.

Das Leuchtmittel-Modul umfasst insbesondere wenigstens eine Leuchtdiode (LED) als Leuchtmittel. Die wenigstens eine Leuchtdiode kann eine organische Leuchtdiode (OLED), anorganische Leuchtdiode, Leuchtdiode mit Sekundäranregung, Leuchtdiode mit Primäranregung usw. sein. Das Leuchtmittel-Modul ist nicht auf eine Leuchtdiode als Leuchtmittel beschränkt und kann folglich auch andere dem Fachmann bekannte Leuchtmittel aufweisen. Wenn das Leuchtmittel-Modul als Leuchtmittel wenigstens eine Leuchtdiode aufweist, dann kann es als ein "*Leuchtdioden-Modul*" bezeichnet werden und der Leuchtmittel-Konverter, der dann ein solches Leuchtdioden-Modul betreibt, kann als "*Leuchtdioden-Konverter*" bezeichnet werden.

Unter einem "*ersten Effizienzwert des wenigstens einen Leuchtmittel-Moduls*" versteht man insbesondere einen Wert, der das Verhältnis zwischen der Energie, die durch das wenigstens eine Leuchtmittel-Modul aufgrund der zugeführten elektrischen Energie in Form von Licht ausgegeben wird, und der elektrischen Energie wiedergibt, die dem wenigstens einen Leuchtmittel-Modul zugeführt wird bzw. mit der das Leuchtmittel-Modul versorgt wird. Mit anderen Worten wird unter dem ersten Effizienzwert insbesondere ein Wert verstanden, der das Verhältnis der durch das wenigstens eine Leuchtmittel-Modul abgegebenen Lichtleistung zu der dem wenigstens einen Leuchtmittel-Modul zugeführten elektrischen Leistung bzw. elektrischen Energie wiedergibt. Je höher der erste Effizienzwert ist, desto effizienter wandelt das Leuchtmittel-Modul die zugeführte elektrische Energie in Licht um. Der erste Effizienzwert des wenigstens einen Leuchtmittel-Moduls kann auch als "*erster Wirkungsgrad*" bezeichnet werden.

Unter einem "*zweiten Effizienzwert des Leuchtmittel-Konverters*" versteht man insbesondere einen Wert, der das Verhältnis der durch den Leuchtmittel-Konverter ausgegebenen elektrischen Leistung bzw. Energie zu der durch den Leuchtmittel-Konverter aufgenommenen elektrischen Leistung bzw. Energie wiedergibt. Je höher der zweite Effizienzwert ist, desto effizienter wandelt der Leuchtmittel-Konverter die aufgenommene elektrische Leistung bzw. Energie in eine durch den Leuchtmittel-Konverter ausgegebene elektrische Leistung bzw. Energie um. Der zweite Effizienzwert des wenigstens einen Leuchtmittel-Moduls kann auch als *"zweiter Wirkungsgrad"* bezeichnet werden.

Unter der "*Gesamteffizienz des Beleuchtungssystems*" wird insbesondere ein Wert verstanden, der das Verhältnis der durch das Beleuchtungssystem, insbesondere das wenigstens eine Leuchtmittel-Modul, ausgegebenen Lichtleistung zu der dem Beleuchtungssystem, insbesondere dem Leuchtmittel-Konverter, zugeführten elektrischen Leistung bzw. Energie wiedergibt. Die Gesamteffizienz des Beleuchtungssystems kann auch als "*Gesamtwirkungsgrad des Beleuchtungssystems*" bezeichnet werden. Die Gesamteffizienz des Beleuchtungssystems ergibt sich insbesondere aus dem ersten Effizienzwert des Leuchtmittel-Moduls und dem zweiten Effizienzwert des Leuchtmittel-Konverters.

Vorzugsweise wird der zweite Effizienzwert auf der Basis des dem Dimmpegel entsprechenden Leuchtmittel-Stroms bestimmt, wobei ein hinsichtlich der Gesamteffizienz des Beleuchtungssystems optimierter Leuchtmittel-Strom innerhalb eines Korridors für den dem Dimmpegel entsprechenden Leuchtmittel-Strom auf der Basis des ersten Effizienzwertes und des zweiten Effizienzwertes für den hinsichtlich der Gesamteffizienz des Beleuchtungssystems optimierten Arbeitspunkt der die Lichtleistung beeinflussenden Betriebsgröße ausgewertet wird, an dem der Leuchtmittel-Konverter das wenigstens eine Leuchtmittel-Modul mit dem optimierten Leuchtmittel-Strom betreibt.

Der erste Effizienzwert ist vorzugsweise der durch das wenigstens eine Leuchtmittel-Modul ausgegebene relative Lichtstrom.

Unter einem relativen Lichtstrom, wird ein Lichtstromwert verstanden, der hinsichtlich eines anderen Lichtstromwertes normiert ist.

Vorzugsweise kann als erster Effizienzwert auch eine andere die Lichtleistung des Leuchtmittel-Moduls wiedergebende Größe, wie zum Beispiel die durch das wenigstens eine Leuchtmittel-Modul ausgegebene Beleuchtungsstärke, ausgegebene Lichtmenge usw. dienen.

Der zweite Effizienzwert ist vorzugsweise das Verhältnis der durch den Leuchtmittel-Konverter abgegebenen elektrischen Leistung zu der durch den Leuchtmittel-Konverter aufgenommenen elektrischen Leistung.

Ferner ist vorzugsweise der Korridor für den Dimmpegel durch einen unteren Grenzwert und einen oberen Grenzwert für den Dimmpegel festgelegt. Insbesondere entspricht der untere Grenzwert 70% des Dimmpegels und der obere Grenzwert entspricht 100% des Dimmpegels. Der Korridor für den dem Dimmpegel entsprechenden Leuchtmittel-Strom ist vorzugsweise durch einen unteren Grenzwert und einen oberen Grenzwert für den Leuchtmittel-Strom festgelegt. Insbesondere entspricht der untere Grenzwert 70% des dem Dimmpegel entsprechenden Leuchtmittel-Stroms und der obere Grenzwert entspricht 100% des dem Dimmpegel entsprechenden Leuchtmittel-Stroms.

Insbesondere ist der untere Grenzwert und der obere Grenzwert des Korridors für einen vorliegenden Dimmpegel derart gewählt, dass sich ein Betrieb des Leuchtmittel-Konverters gemäß einem innerhalb des Korridors liegenden Dimmpegels im Vergleich zu einem Betrieb des Leuchtmittel-Konverters gemäß dem vorliegenden Dimmpegel hinsichtlich der durch das Leuchtmittel-Modul ausgegebenen Lichtleistung vernachlässigbar unterscheidet bzw. toleriert werden kann. Zum Beispiel es gibt viele Anwendungen, in denen der Unterschied zwischen einem Betrieb des Beleuchtungssystems bei einem Dimmpegel von 100% und einem Dimmpegel von 70% nicht kritisch ist, d.h. toleriert werden kann.

Vorzugsweise ist der Korridor für den Dimmpegel derart gewählt, dass je kleiner der vorliegende Dimmpegel ist, desto kleiner ist der Korridor bzw. Wertebereich für den Dimmpegel.

Vorzugsweise wird die durch den Leuchtmittel-Konverter aufgenommene elektrische Leistung erfasst. Alternativ oder zusätzlich wird die durch den Leuchtmittel-Konverter abgegebene Leistung, insbesondere auf der Basis des durch den Leuchtmittel-Konverter abgegeben Leuchtmittel-Stroms und Leuchtmittel-Spannung, erfasst.

Insbesondere werden die Spannung und der Strom, die der Leuchtmittel-Konverter aufnimmt, erfasst, um auf der Basis der aufgenommenen Spannung und dem aufgenommenen Strom die durch den Leuchtmittel-Konverter aufgenommene elektrische Leistung bzw. Energie zu erfassen. Ferner werden insbesondere der Leuchtmittel-Strom und die Leuchtmittel-Spannung, die durch den Leuchtmittel-Konverter abgegeben bzw. ausgegeben werden, erfasst, um auf der Basis der Leuchtmittel-Spannung und des Leuchtmittel-Stroms die durch den Leuchtmittel-Konverter abgegebene Leistung zu erfassen.

Die Begriffe "*abgeben*" und "*ausgeben*" werden synonym verwendet.

Folglich kann der aktuelle zweite Effizienzwert, insbesondere das Verhältnis der durch den Leuchtmittel-Konverter abgegebenen Leistung zu der durch den Leuchtmittel-Konverter aufgenommenen elektrischen Leistung fortlaufend ermittelt bzw. bestimmt werden.

Vorzugsweise wird der erste Effizienzwert, insbesondere der durch das wenigstens eine Leuchtmittel-Modul ausgegebene Lichtstrom, unter Verwendung wenigstens eines Lichtsensors gemessen.

Unter einem "*Lichtsensor*" wird ein Sensor verstanden, der dazu eingerichtet ist, Licht in ein elektrisches Signal umzuwandeln. Die vorliegende Erfindung ist nicht auf einen bestimmten Lichtsensor beschränkt. Der Lichtsensor kann zum Beispiel wenigstens eine Photozelle und/oder wenigstens einen Fotowiderstand umfassen bzw. solchen entsprechen.

Vorzugsweise wird der erste Effizienzwert des wenigstens einen Leuchtmittel-Moduls auf der Basis der Temperatur des wenigstens einen Leuchtmittel-Moduls bestimmt, die beim Betrieb des wenigstens einen Leuchtmittel-Moduls durch den Leuchtmittel-Konverter mit dem Dimmpegel vorliegt. Insbesondere wird der erste Effizienzwert auf der Basis der Temperatur des wenigstens einen Leuchtmittel-Moduls bestimmt, die beim Betrieb des wenigstens einen Leuchtmittel-Moduls mit dem dem Dimmpegel entsprechenden Leuchtmittel-Strom vorliegt.

Hierin wird "*ein Betrieb des wenigstens einen Leuchtmittel-Moduls durch den Leuchtmittel-Konverter mit dem Dimmpegel*" und "*ein Betrieb des wenigstens einen Leuchtmittel-Moduls durch den Leuchtmittel-Konverter gemäß dem Dimmpegel*" als Synonyme verstanden.

Die Temperatur des wenigstens einen Leuchtmittel-Moduls hängt insbesondere von der die Lichtleistung beeinflussenden Betriebsgröße, wie z.B. dem Leuchtmittel-Strom, mit der das wenigstens eine Leuchtmittel-Modul versorgt wird; von der Umgebungstemperatur sowie von der Kühlung des wenigstens einen Leuchtmittel Moduls ab.

Ferner wird vorzugsweise die Temperatur des wenigstens einen Leuchtmittel-Moduls bei dem Dimmpegel, insbesondere unter Berücksichtigung der Umgebungstemperatur, auf der Basis des dem Dimmpegel entsprechenden Leuchtmittel-Stroms erfasst.

Des Weiteren wird vorzugsweise die Temperatur des wenigstens einen Leuchtmittel-Moduls unter Verwendung wenigstens eines Temperatursensors gemessen.

Unter einem "*Temperatursensor*" wird ein Sensor verstanden, der dazu eingerichtet ist, die Temperatur des Leuchtmittel-Moduls in ein elektrisches Signal umzuwandeln. Die vorliegende Erfindung ist nicht auf einen bestimmten Temperatursensor beschränkt. Der Temperatursensor kann zum Beispiel wenigstens einen Heißleiter (NTC) und/oder wenigstens einen Kaltleiter (PTC) umfassen bzw. solchen entsprechen.

Der Einsatz eines Temperatursensors ist vorteilhaft, da hierdurch die Temperatur des Leuchtmittel-Moduls gemessen wird und folglich die Umgebungstemperatur sowie eine Kühlung des Leuchtmittel-Moduls bei der Erfassung der Temperatur des Leuchtmittel-Moduls automatisch berücksichtigt wird.

Gemäß einer bevorzugten Ausführungsform des erfindungsgemäßen Verfahrens wird vorzugsweise der optimierte Dimmpegel innerhalb des Korridors für den Dimmpegel unter Verwendung wenigstens eines ersten Datensatzes und wenigstens eines zweiten Datensatzes ausgewertet; wobei der wenigstens eine erste Datensatz das Verhältnis zwischen dem ersten Effizienzwert und der Temperatur des wenigstens einen Leuchtmittel-Moduls für einen Wert des Leuchtmittel-Stroms wiedergibt, und wobei der wenigstens eine zweite Datensatz das Verhältnis zwischen dem zweiten Effizienzwert und dem Leuchtmittel-Strom wiedergibt. Insbesondere wird der optimierte Leuchtmittel-Strom innerhalb des Korridors für den dem Dimmpegel entsprechenden Leuchtmittel-Strom unter Verwendung wenigstens eines ersten Datensatzes und wenigstens eines zweiten Datensatzes ausgewertet; wobei der wenigstens eine erste Datensatz das Verhältnis zwischen dem ersten Effizienzwert und der Temperatur des wenigstens einen Leuchtmittel-Moduls für einen Wert des Leuchtmittel-Stroms wiedergibt, und wobei der wenigstens eine zweite Datensatz das Verhältnis zwischen dem zweiten Effizienzwert und dem Leuchtmittel-Strom wiedergibt.

Gemäß einer weiteren bevorzugten Ausführungsform des erfindungsgemäßen Verfahrens wird vorzugsweise der optimierte Dimmpegel innerhalb des Korridors für den Dimmpegel unter Verwendung mehrerer erster Datensätze und des wenigstens einen zweiten Datensatzes ausgewertet; wobei die mehreren ersten Datensätze das Verhältnis zwischen dem ersten Effizienzwert und der Temperatur des wenigstens einen Leuchtmittel-Moduls für verschiedene Werte des Leuchtmittel-Stroms wiedergeben, und wobei der wenigstens eine zweite Datensatz das Verhältnis zwischen dem zweiten Effizienzwert und dem Leuchtmittel-Strom wiedergibt. Insbesondere wird vorzugsweise der optimierte Leuchtmittel-Strom innerhalb des Korridors für den dem Dimmpegel entsprechenden Leuchtmittel-Strom unter Verwendung mehrerer erster Datensätze und des wenigstens einen zweiten Datensatzes ausgewertet; wobei die mehreren ersten Datensätze das Verhältnis zwischen dem ersten Effizienzwert und der Temperatur des wenigstens einen Leuchtmittel-Moduls für verschiedene Werte des Leuchtmittel-Stroms wiedergeben, und wobei der wenigstens eine zweite Datensatz das Verhältnis zwischen dem zweiten Effizienzwert und dem Leuchtmittel-Strom wiedergibt.

Gemäß der vorstehenden bevorzugten Ausführungsform des erfindungsgemäßen Verfahrens wird vorzugsweise der wenigstens eine erste Datensatz und/oder der wenigstens eine zweite Datensatz bereitgestellt. Alternativ wird vorzugsweise gemäß der vorstehenden bevorzugten Ausführungsform des erfindungsgemäßen Verfahrens der wenigstens eine erste Datensatz und/oder der wenigstens eine zweite Datensatz durch selbständiges Lernen des Beleuchtungssystems erstellt.

Unter "*einem selbständigen Lernen"* des Beleuchtungssystems versteht man insbesondere, dass das Beleuchtungssystem im Betrieb die für das erfindungsgemäße Verfahren benötigten Parameter, wie zum Beispiel den ersten Effizienzwert, insbesondere den Lichtstrom des Leuchtmittel-Moduls, für verschiedene Werte des Leuchtmittel-Stroms bei verschiedenen Temperaturen; sowie den zweiten Effizienzwert, insbesondere das Verhältnis der ausgegebenen elektrischen Leistung des Leuchtmittel-Konverters zu der zugeführten elektrischen Leistung des Leuchtmittel-Konverters, für verschiedene Werte des Leuchtmittel-Stroms fortlaufend erfasst, um dann den wenigsten einen ersten Datensatz und/oder den wenigstens einen zweiten Datensatz zu erstellen, auf deren Basis dann eine Optimierung des Dimmpegels hinsichtlich der Gesamteffizienz des Beleuchtungssystems durchgeführt werden kann.

Gemäß der vorstehenden weiteren bevorzugten Ausführungsform des erfindungsgemäßen Verfahrens werden vorzugsweise die mehreren ersten Datensätze und/oder der wenigstens eine zweite Datensatz bereitgestellt. Alternativ oder zusätzlich wird vorzugsweise gemäß der vorstehenden weiteren bevorzugten Ausführungsform des erfindungsgemäßen Verfahrens die mehreren ersten Datensätze und/oder der wenigstens eine zweite Datensatz durch selbständiges Lernen des Beleuchtungssystems erstellt.

Unter "*einem selbständigen Lernen"* des Beleuchtungssystems versteht man insbesondere, dass das Beleuchtungssystem im Betrieb die für das erfindungsgemäße Verfahren benötigten Parameter, wie zum Beispiel den ersten Effizienzwert, insbesondere den Lichtstrom des Leuchtmittel-Moduls, für verschiedene Werte des Leuchtmittel-Stroms bei verschiedenen Temperaturen; sowie den zweiten Effizienzwert, insbesondere das Verhältnis der ausgegebenen elektrischen Leistung des Leuchtmittel-Konverters zur zugeführten elektrischen Leistung des Leuchtmittel-Konverters, für verschiedene Werte des Leuchtmittel-Stroms fortlaufend erfasst, um dann die mehreren ersten Datensätze und/oder den wenigstens einen zweiten Datensatz zu erstellen, auf deren Basis dann eine Optimierung des Dimmpegels hinsichtlich der Gesamteffizienz des Beleuchtungssystems durchgeführt werden kann.

Um das erfindungsgemäße Verfahren zu erreichen, können die vorstehenden optionalen Merkmale beliebig kombiniert werden.

Gemäß der vorliegenden Erfindung wird ferner ein Beleuchtungssystem bereitgestellt, wobei das Beleuchtungssystem wenigstens ein Leuchtmittel-Modul, insbesondere wenigstens ein Leuchtdioden-Modul; einen Leuchtmittel-Konverter, insbesondere einen Leuchtdioden-Konverter, der zum Betreiben des wenigstens einen Leuchtmittel-Moduls eingerichtet ist; und eine Steuereinheit aufweist. Die Steuereinheit ist dazu eingerichtet, den Leuchtmittel-Konverter auf der Basis eines Dimmpegels zu steuern sowie in einem Energiespar-Modus das vorstehend beschriebene erfindungsgemäße Verfahren auszuführen. Die Steuereinheit ist insbesondere ein Bestandteil des Leuchtmittel-Konverters.

Der Leuchtmittel-Konverter ist insbesondere dazu eingerichtet, das wenigstens eine Leuchtmittel-Modul elektrisch zu versorgen und dadurch die Lichtabgabe des wenigstens einen Leuchtmittel-Moduls gemäß einem Dimmpegel zu steuern. Insbesondere ist der Leuchtmittel-Konverter dazu eingerichtet, dem wenigstens einen Leuchtmittel-Modul eine die Lichtleistung beeinflussende Betriebsgröße, wie z.B. einen Leuchtmittel-Strom, zuzuführen, um die durch das wenigstens eine Leuchtmittel-Modul abgegebene Lichtleistung bzw. die Helligkeit des Leuchtmittel-Moduls durch Änderung der die Lichtleistung beeinflussenden Betriebsgröße gemäß einem Dimmpegel zu steuern.

Der Leuchtmittel-Konverter kann wenigstens einen Schaltregler bzw. aktiv getakteten DC/DC-Konverter mit wenigstens einem Schalter und wenigstens einem elektrischen Speicher, wie z.B. einer Induktivität bzw. Drossel, umfassen oder einem solchen entsprechen. Durch Taktung des wenigstens einen Schalters und dem dadurch verursachten Laden und Entladen des wenigstens einen Energiespeichers (Induktivität bzw. Drossel) kann der aktiv getaktete DC/DC-Konverter eine Eingangsspannung in eine kleinere oder größere Ausgangsspannung (abhängig von der Art des DC-DC-Konverters) wandeln und dadurch eine die Lichtleistung beeinflussende Betriebsgröße, wie z.B. einen Leuchtmittel-Strom, bereitstellen.

Ein "*aktiv getakteter DC*/*DC-Konverter*" kann auch als "*aktiv getakteter Gleichspannungswandler*" bzw. "*aktiv getakteter DC*/*DC-Wandler*" bezeichnet werden. Beispiele für einen aktiv getakteten DC/DC-Konverter sind ein Abwärtswandler (auch "*Tiefsetzsteller*" oder "*Buck-Konverter*" genannt); ein Aufwärtswandler (auch auch "*Hochsetzsteller*" oder "*Boost-Konverter*" genannt); ein Sperrwandler (auch "*Flyback-Konverter*" genannt), ein Resonanzwandler usw.

Der Leuchtmittel-Konverter ist aber nicht auf aktiv getaktete DC/DC-Konverter beschränkt, sodass auch jeder andere dem Fachmann bekannte Leuchtmittel-Konverter verwendet werden kann.

Das Leuchtmittel-Modul weist wenigstens ein Leuchtmittel auf bzw. entspricht einem solchen. Das Leuchtmittel-Modul kann durch den Leuchtmittel-Konverter elektrisch versorgt werden. Wenn das Leuchtmittel-Modul mehr als ein Leuchtmittel aufweist bzw. mehreren Leuchtmitteln entspricht, dann können die mehreren Leuchtmittel miteinander parallel und/oder in Reihe elektrisch verbunden werden.

Das Leuchtmittel-Modul umfasst insbesondere wenigstens eine Leuchtdiode (LED) als Leuchtmittel. Die wenigstens eine Leuchtdiode kann eine organische Leuchtdiode (OLED), anorganische Leuchtdiode, Leuchtdiode mit Sekundäranregung, Leuchtdiode mit Primäranregung usw. sein. Das Leuchtmittel-Modul ist nicht auf eine Leuchtdiode als Leuchtmittel beschränkt und kann folglich auch andere dem Fachmann bekannte Leuchtmittel aufweisen. Wenn das Leuchtmittel-Modul als Leuchtmittel wenigstens eine Leuchtdiode aufweist, dann kann es als ein "*Leuchtdioden-Modul*" bezeichnet werden und der Leuchtmittel-Konverter, der dann ein solches Leuchtdioden-Modul betreibt, kann als "*Leuchtdioden-Konverter*" bezeichnet werden.

Die Steuereinheit ist vorzugsweise ein Prozessor, ein Mikroprozessor, ein Controller, ein Mikrocontroller oder eine anwendungsspezifische integrierte Schaltung (ASIC) oder eine Kombination aus diesen genannten Elementen. Für den Fall, dass der Leuchtmittel-Konverter wenigstens einen Schaltregler bzw. aktiv getakteten DC/DC-Konverter mit wenigstens einem Schalter und wenigstens einem elektrischen Speicher, wie z.B. einer Induktivität bzw. Drossel, umfasst bzw. einem solchen entspricht, ist die Steuereinheit insbesondere dazu eingerichtet, den wenigstens einen Schalter des aktiv getakteten DC/DC-Konverters zu steuern.

Die Steuereinheit ist insbesondere dazu eingerichtet, die die Lichtleistung beeinflussende Betriebsgröße zu erfassen. Hierfür ist vorzugsweise eine entsprechende Erfassungseinheit im Beleuchtungssystem, insbesondere in dem Leuchtmittel-Konverter, vorgesehen.

Insbesondere ist die Steuereinheit dazu eingerichtet, die die Lichtleistung beeinflussende Betriebsgröße zu erfassen, um bei dem Betrieb des Leuchtmittel-Konverters gemäß dem Dimmpegel eine entsprechend Regelung durchführen zu können.

Vorzugsweise ist die Steuereinheit dazu eingerichtet, den Leuchtmittel-Strom zu erfassen. Insbesondere ist die Steuereinheit dazu eingerichtet, den Leuchtmittel-Strom zu erfassen, um bei dem Betrieb des Leuchtmittel-Konverters gemäß einem Dimmpegel eine entsprechende Regelung des durch den Leuchtmittel-Konverter dem wenigstens einen Leuchtmittel-Modul zugeführten Leuchtmittel-Stroms auf den Wert des dem Dimmpegel entsprechenden Leuchtmittel-Stroms durchführen zu können.

Vorzugsweise weist das Beleuchtungssystem wenigstens eine Erfassungseinheit zum Erfassen von die Lichtleistung beeinflussenden Betriebsgrößen auf. Insbesondere weist das Beleuchtungssystem wenigstens eine Erfassungseinheit auf, wie zum Beispiel einen Shunt-Widerstand bzw. Messwiderstand, die dazu eingerichtet ist, den durch den Leuchtmittel-Konverter an das Leuchtmittel-Modul ausgegebenen Leuchtmittel-Strom zu messen und das Messergebnis der Steuereinheit zuzuführen. Ferner weist das Beleuchtungssystem wenigstens eine Erfassungseinheit auf, wie zum Beispiel einen Spannungsteiler, die dazu eingerichtet ist, die durch den Leuchtmittel-Konverter an das Leuchtmittel-Modul ausgegebene Leuchtmittel-Spannung zu messen und das Messergebnis der Steuereinheit zuzuführen.

Die Steuereinheit ist vorzugsweise dazu eingerichtet, auf der Basis des Leuchtmittel-Stroms und der Leuchtmittel-Spannung die durch den Leuchtmittel-Konverter abgegebene bzw. bereitgestellte elektrische Leistung zu erfassen.

Vorzugsweise weist das Beleuchtungssystem ferner wenigstens eine Erfassungseinheit auf, wie zum Beispiel einen Shunt-Widerstand bzw. Messwiderstand, die dazu eingerichtet ist, den dem Leuchtmittel-Konverter zugeführten Strom zu messen und das Messergebnis der Steuereinheit zuzuführen. Ferner weist das Beleuchtungssystem wenigstens eine Erfassungseinheit auf, wie zum Beispiel einen Spannungsteiler, die dazu eingerichtet ist, die dem Leuchtmittel-Konverter zugeführte Spannung zu messen und das Messergebnis der Steuereinheit zuzuführen.

Die Steuereinheit ist vorzugsweise dazu eingerichtet, auf der Basis des dem Leuchtmittel-Konverter zugeführten Stroms und der dem Leuchtmittel-Konverter zugeführten Spannung die durch den Leuchtmittel-Konverter aufgenommene elektrische Leistung zu erfassen.

Die Spannung und der Strom können ausgehend von einer externen elektrischen Energiequelle, wie zum Beispiel einer Batterie oder dem Stromnetz, dem Leuchtmittel-Konverter zugeführt werden, damit der Leuchtmittel-Konverter ausgehend von dieser eingangsseitigen elektrischen Versorgung ausgangseitig einen Leuchtmittel-Strom und eine Leuchtmittel-Spannung zum Betrieb des Leuchtmittel-Moduls bereitstellen bzw. abgeben kann.

Wenn der Energiespar-Modus der Steuereinheit deaktiviert ist, dann ist vorzugsweise die Steuereinheit dazu eingerichtet, den Leuchtmittel-Konverter gemäß dem Dimmpegel zu steuern, sodass der Leuchtmittel-Konverter dem wenigstens einen Leuchtmittel-Modul einen dem Dimmpegel entsprechenden Leuchtmittel-Strom zuführt. Wenn der Energiespar-Modus der Steuereinheit aktiviert ist, dann ist die Steuereinheit vorzugsweise dazu eingerichtet, das vorstehend beschriebene erfindungsgemäße Verfahren auszuführen und folglich den Leuchtmittel-Konverter gemäß dem hinsichtlich der Gesamteffizienz des Beleuchtungssystems optimierten Dimmpegel zu steuern, sodass der Leuchtmittel-Konverter dem wenigstens einen Leuchtmittel-Modul einen dem optimierten Dimmpegel entsprechenden Leuchtmittel-Strom (optimierten Leuchtmittel-Strom) zuführt.

Ferner ist die Steuereinheit vorzugsweise dazu eingerichtet, in dem Energiespar-Modus das vorstehend beschriebene erfindungsgemäße Verfahren fortlaufend, insbesondere periodisch, zu wiederholen.

Mit anderen Worten ist die Steuereinheit vorzugsweise dazu eingerichtet, in dem Energiespar-Modus das vorstehend beschriebene erfindungsgemäße Verfahren kontinuierlich in Zeitabständen, die insbesondere gleich groß sind, zu wiederholen.

Des Weiteren ist die Steuereinheit vorzugsweise dazu eingerichtet, durch einen externen Befehl in den Energiespar-Modus versetz zu werden.

Vorzugsweise weist das Beleuchtungssystem wenigstens einen Temperatursensor auf, wobei der wenigstens eine Temperatursensor dazu eingerichtet ist, die Temperatur des wenigstens einen Leuchtmittel-Moduls zu messen und das Messergebnis der Steuereinheit zuzuführen. Zusätzlich oder alternativ weist das Beleuchtungssystem vorzugsweise wenigstens einen Lichtsensor auf, wobei der wenigstens eine Lichtsensor dazu eingerichtet ist, den Lichtstrom des Leuchtmittel-Moduls zu messen und das Messergebnis der Steuereinheit zuzuführen.

Unter einem "*Temperatursensor*" wird ein Sensor verstanden, der dazu eingerichtet ist, die Temperatur des Leuchtmittel-Moduls in ein elektrisches Signal umzuwandeln. Die vorliegende Erfindung ist nicht auf einen bestimmten Temperatursensor beschränkt. Der Temperatursensor kann zum Beispiel wenigstens einen Heißleiter (NTC) und/oder wenigstens einen Kaltleiter (PTC) umfassen bzw. solchen entsprechen.

Unter einem "*Lichtsensor*" wird ein Sensor verstanden, der dazu eingerichtet ist, Licht in ein elektrisches Signal umzuwandeln. Die vorliegende Erfindung ist nicht auf einen bestimmten Lichtsensor beschränkt. Der Lichtsensor kann zum Beispiel wenigstens eine Photozelle und/oder wenigstens einen Fotowiderstand umfassen bzw. solchen entsprechen.

Gemäß einer bevorzugten Ausführungsform des erfindungsgemäßen Beleuchtungssystems ist die Steuereinheit vorzugsweise dazu eingerichtet, wenigstens einen ersten Datensatz und/oder wenigstens einen zweiten Datensatz von extern zugeführt zu bekommen. Alternativ oder zusätzlich ist die Steuereinheit vorzugsweise dazu eingerichtet, den wenigstens einen ersten Datensatz und/oder den wenigstens einen zweiten Datensatz durch selbständiges Lernen zu erstellen. Hierbei gibt der wenigstens eine erste Datensatz das Verhältnis zwischen dem ersten Effizienzwert und der Temperatur des wenigstens einen Leuchtmittel-Moduls für einen Wert des Leuchtmittel-Stroms wieder, und der wenigstens eine zweite Datensatz gibt das Verhältnis zwischen dem zweiten Effizienzwert und dem Leuchtmittel-Strom wieder.

Unter "*einem selbständigen Lernen"* der Steuereinheit versteht man insbesondere, dass die Steuereinheit beim Betrieb des Leuchtmittel-Konverters die für das erfindungsgemäße Verfahren benötigten Parameter, wie zum Beispiel den ersten Effizienzwert, insbesondere den Lichtstrom des Leuchtmittel-Moduls, für verschiedene Werte des Leuchtmittel-Stroms bei verschiedenen Temperaturen des wenigstens einen Leuchtmittel-Moduls; sowie den zweiten Effizienzwert, insbesondere das Verhältnis der ausgegebenen elektrischen Leistung des Leuchtmittel-Konverters zu der zugeführten elektrischen Leistung des Leuchtmittel-Konverters, für verschiedene Werte des Leuchtmittel-Stroms fortlaufend erfasst, um dann den wenigstens einen ersten Datensatz und/oder den wenigstens einen zweiten Datensatz zu erstellen, auf deren Basis dann eine Optimierung des Dimmpegels hinsichtlich der Gesamteffizienz des Beleuchtungssystems durchgeführt werden kann.

Gemäß einer weiteren bevorzugten Ausführungsform des erfindungsgemäßen Beleuchtungssystems ist die Steuereinheit vorzugsweise dazu eingerichtet, mehrere erste Datensätze und/oder wenigstens einen zweiten Datensatz von extern zugeführt zu bekommen. Alternativ oder zusätzlich ist die Steuereinheit vorzugsweise dazu eingerichtet, die mehreren erste Datensätze und den wenigstens einen zweiten Datensatz durch selbständiges Lernen zu erstellen. Hierbei geben die mehreren ersten Datensätze das Verhältnis zwischen dem ersten Effizienzwert und der Temperatur des wenigstens einen Leuchtmittel-Moduls für verschiedene Werte des Leuchtmittel-Stroms wieder, und der wenigstens eine zweite Datensatz gibt das Verhältnis zwischen dem zweiten Effizienzwert und dem Leuchtmittel-Strom wieder.

Unter "*einem selbständigen Lernen"* der Steuereinheit versteht man insbesondere, dass die Steuereinheit beim Betrieb des Leuchtmittel-Konverters die für das erfindungsgemäße Verfahren benötigten Parameter, wie zum Beispiel den ersten Effizienzwert, insbesondere den Lichtstrom des Leuchtmittel-Moduls, für verschiedene Werte des Leuchtmittel-Stroms bei verschiedenen Temperaturen des wenigstens einen Leuchtmittel-Moduls; sowie den zweiten Effizienzwert, insbesondere das Verhältnis der ausgegebenen elektrischen Leistung zur zugeführten elektrischen Leistung des Leuchtmittel-Konverters, für verschiedene Werte des Leuchtmittel-Stroms fortlaufend erfasst, um dann die mehreren ersten Datensätze und/oder den wenigstens einen zweiten Datensatz zu erstellen, auf deren Basis dann eine Optimierung des Dimmpegels hinsichtlich der Gesamteffizienz des Beleuchtungssystems durchgeführt werden kann.

Um das erfindungsgemäße Beleuchtungssystem zu erreichen, können die vorstehenden optionalen Merkmale beliebig kombiniert werden.

### 4. Beschreibung bevorzugter Ausführungsformen

Nachfolgend wird eine detaillierte Beschreibung der Figuren gegeben. Darin zeigt:
- **Figur 1**: einen schematischen Schaltplan einer bevorzugten Ausführungsform eines erfindungsgemäßen Beleuchtungssystems,
- **Figur 2**: ein schematisches Flussdiagram einer bevorzugten Ausführungsform des erfindungsgemäßen Verfahrens,
- **Figur 3**: ein Beispiel für das Verhältnis zwischen dem durch ein Leuchtmittel-Modul ausgegebenen relativen Lichtstrom und der Temperatur tp des Leuchtmittel-Moduls für einen dem Leuchtmittel-Modul zugeführten Leuchtmittel-Strom, wobei das Leuchtmittel-Modul durch einen Leuchtmittel-Konverter betrieben wird, für den Figur 4 beispielhaft die Effizienz des Leuchtmittel-Konverters für verschiedene Leuchtmittel-Stromwerte zeigt,
- **Figur 4**: beispielhaft die Effizienz eines Leuchtmittel-Konverters für verschiedene Werte des durch den Leuchtmittel-Konverter bereitgestellten Leuchtmittel-Stroms I_{L},
- **Figur 5**: ein Beispiel für das Verhältnis zwischen dem durch ein Leuchtmittel-Modul ausgegebenen relativen Lichtstrom und der Temperatur tp des Leuchtmittel-Moduls für einen dem Leuchtmittel-Modul zugeführten Leuchtmittel-Strom, wobei das Leuchtmittel-Modul durch einen Leuchtmittel-Konverter betrieben wird, für den Figur 6 beispielhaft die Effizienz des Leuchtmittel-Konverters für verschiedene Leuchtmittel-Stromwerte zeigt, und
- **Figur 6**: beispielhaft die Effizienz eines Leuchtmittel-Konverters für verschiedene Werte des durch den Leuchtmittel-Konverter bereitgestellten Leuchtmittel-Stroms I_{L},
- **Figur 7**: ein Beispiel für das Verhältnis zwischen dem durch ein Leuchtmittel-Modul ausgegebenen relativen Lichtstrom und dem dem Leuchtmittel-Modul zugeführten Leuchtmittel-Strom I_{L}.

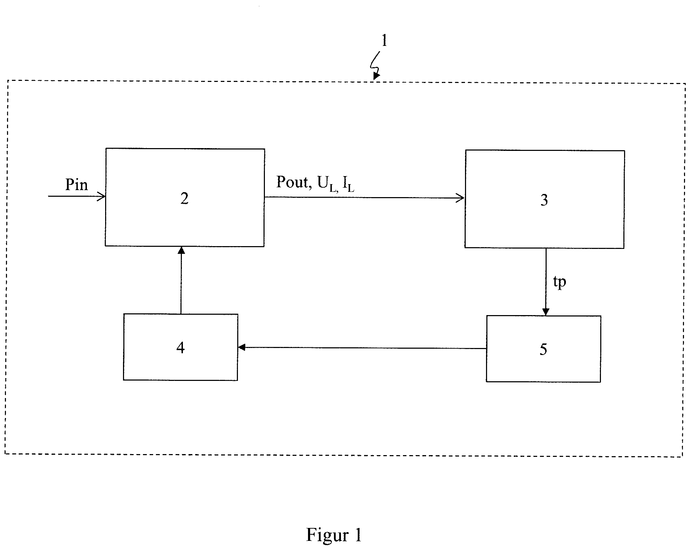

**Figur 1** zeigt einen schematischen Schaltplan einer bevorzugten Ausführungsform eines erfindungsgemäßen Beleuchtungssystems 1.

Das Beleuchtungssystem 1 umfasst einen Leuchtmittel-Konverter 2, ein Leuchtmittel-Modul 3, eine Steuereinheit 4 sowie einen Temperatursensor 5.

Der Leuchtmittel-Konverter 2, das Leuchtmittel-Modul 3, die Steuereinheit 4 sowie der Temperatursensor 5 können wir vorstehend ausgeführt ausgebildet sein.

Der Leuchtmittel-Konverter 2 umfasst insbesondere wenigstens einen aktiv getakteten DC/DC-Konverter und ist zur elektrischen Versorgung und somit zum Betrieb des Leuchtmittel-Moduls 3 eingerichtet. Hierzu stellt der Leuchtmittel-Konverter 2 dem Leuchtmittel-Modul 3 eine Leuchtmittel-Spannung U_{L}, einen Leuchtmittel-Strom I_{L} sowie eine elektrische Leistung Pout bereit (vgl. in Figur 1 Pfeil von dem Leuchtmittel-Konverter 2 zum Leuchtmittel-Modul 3). Durch den dem Leuchtmittel-Modul 3 zugeführten Leuchtmittel-Strom I_{L}, der ein Beispiel für eine die Lichtleistung beeinflussende Betriebsgröße ist, kann der Leuchtmittel-Konverter 2 die durch das Leuchtmittel-Modul 3 ausgegebene Lichtleistung bzw. die Helligkeit des Leuchtmittel-Moduls 3 steuern bzw. einstellen.

Wie bereits vorstehend ausgeführt, kann das Beleuchtungssystem auch mehr als nur ein Leuchtmittel-Modul aufweisen (in Figur 1 nicht gezeigt).

Zur elektrischen Versorgung des Leuchtmittel-Moduls 3 wird dem Leuchtmittel-Konverters 2 eine elektrische Leistung bzw. Energie Pin eingangsseitig zugeführt. Diese wird insbesondere von einer elektrischen Energiequelle, wie zum Beispiel einer Batterie, insbesondere einer wiederaufladbaren Batterie, oder dem Stromnetz zugeführt (in Figur 1 nicht gezeigt). Diese elektrische Energiequelle kann ein Bestandteil des Beleuchtungssystem 1 sein, zum Beispiel falls die elektrische Energiequelle eine Batterie, insbesondere eine wiederaufladbare Batterie, ist.

Der Temperatursensor 5 ist dazu eingerichtet, die Temperatur tp des Leuchtmittel-Moduls 3 zu messen (vgl. in Figur 1 den Pfeil von dem Leuchtmittel-Modul 3 zu dem Temperatursensor 5) sowie das Messergebnis der Steuereinheit 4 zuzuführen (vgl. in Figur 1 den Pfeil von dem Temperatursensor 5 zur Steuereinheit 4).

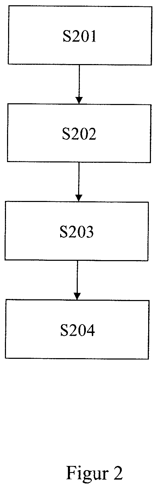

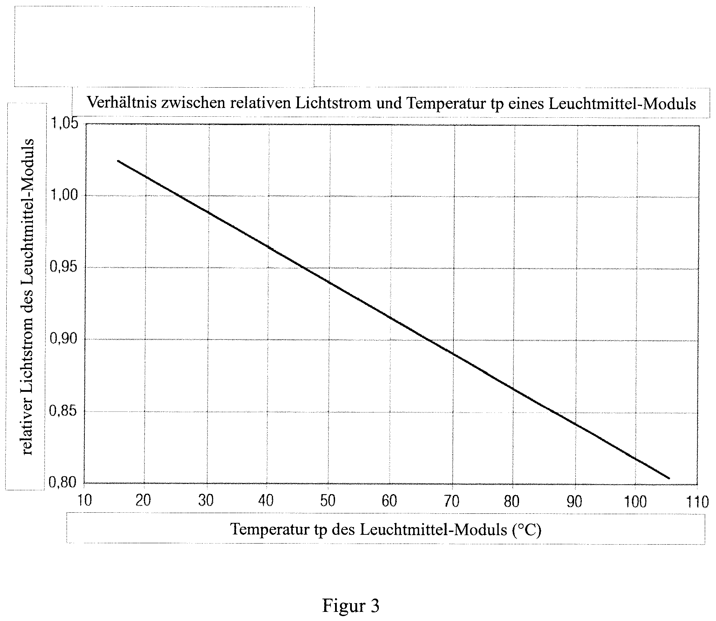

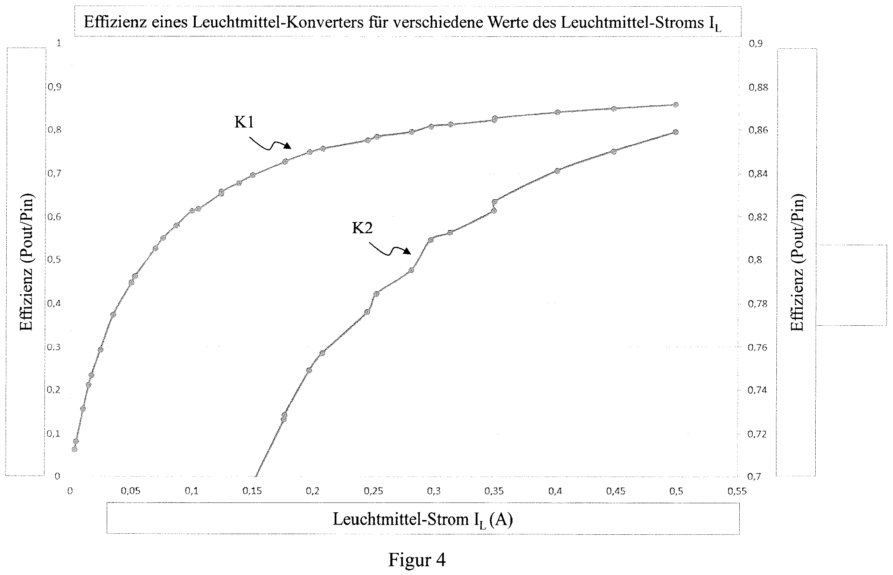

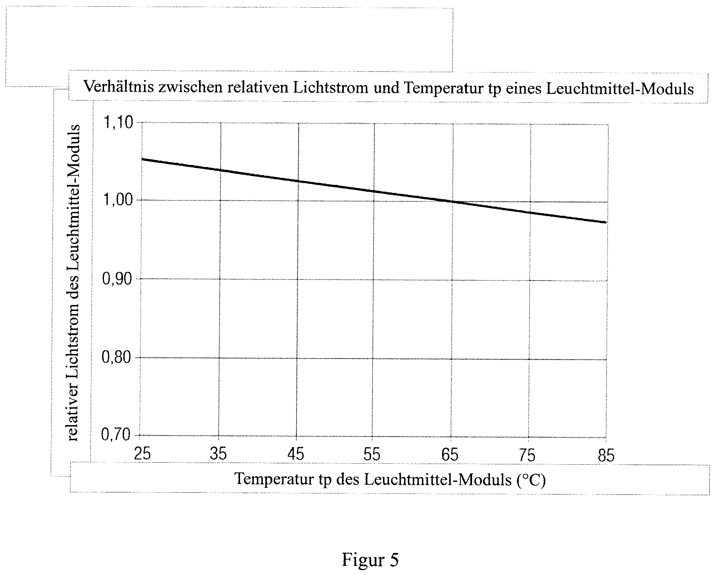

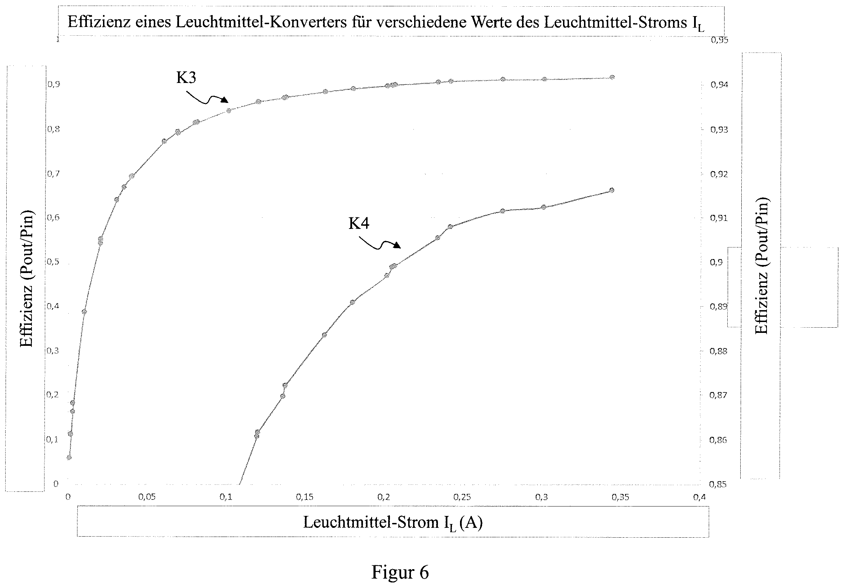

Die Steuereinheit 4 ist dazu eingerichtet, den Leuchtmittel-Konverter 2 auf der Basis eines Dimmpegels zu steuern sowie in einem Energiespar-Modus das vorstehend beschriebene erfindungsgemäße Verfahren auszuführen bzw. durchzuführen (vgl. in Figur 1 Pfeil von der Steuereinheit 4 zu dem Leuchtmittel-Konverter 2). Ein schematisches Flussdiagram einer bevorzugten Ausführungsform des erfindungsgemäßen Verfahrens wird weiter unten unter Bezug auf Figur 2 erläutert. Ferner wird weiter unten ein Beispiel für die Durchführung einer bevorzugte Ausführungsform des erfinderischen Verfahrens mit Bezug auf Figuren 3 und 4 sowie ein weiteres Beispiel für die Durchführung einer bevorzugte Ausführungsform des erfinderischen Verfahrens mit Bezug auf Figuren 5 und 6 erläutert.

Als Antwort auf einen der Steuereinheit 4 zugeführten Dimmpegel, ist die Steuereinheit 4 dazu eingerichtet, den Leuchtmittel-Konverter 2 gemäß dem zugeführten Dimmpegel zu steuern, sodass der Leuchtmittel-Konverter 2 dem Leuchtmittel-Modul 3 einen dem Dimmpegel entsprechenden Leuchtmittel-Strom I_{L} zuführt, wenn der Energiespar-Modus der Steuereinheit 4 deaktiviert ist. Ferner ist die Steuereinheit 4 als Antwort auf den zugeführten Dimmpegel dazu eingerichtet, das erfindungsgemäße Verfahren auszuführen und folglich den Leuchtmittel-Konverter 2 gemäß dem hinsichtlich der Gesamteffizienz des Beleuchtungssystems 1optimierten Dimmpegel zu steuern, sodass der Leuchtmittel-Konverter 2 dem wenigstens einen Leuchtmittel-Modul 3 einen dem optimierten Dimmpegel entsprechenden Leuchtmittel-Strom (optimierter Leuchtmittel-Strom) zuführt, wenn der Energiespar-Modus der Steuereinheit 4 aktiviert ist.

In dem Energiespar-Modus, d.h. der Energiespar-Modus ist aktiviert, ist die Steuereinheit 4 dazu eingerichtet, das erfindungsgemäße Verfahren fortlaufend, insbesondere periodisch, zu wiederholen.

Gemäß der Figur 1 ist die Steuereinheit 4 extern zu dem Leuchtmittel-Konverter 2 angeordnet. Alternativ kann die Steuereinheit 4 aber auch ein Bestandteil des Leuchtmittel-Konverters 2 sein. Die Steuereinheit 4 ist insbesondere dazu eingerichtet, dass ihr Befehle, wie z.B. DALI-Befehle, von extern zugeführt werden. Hierzu kann das Beleuchtungssystem 1 eine Schnittstelle, wie z.B. eine DALI-Schnittstelle, zur Kommunikation, insbesondere bidirektionalen Kommunikation, ausgehend von der Steuereinheit 4 nach extern (außerhalb des Beleuchtungssystems 1) aufweisen.

Der Steuereinheit 4 kann ein Dimmpegel von extern zugeführt werden, gemäß dem die Steuereinheit 4 den Leuchtmittel-Konverter 2 steuern soll. Ferner kann der Steuereinheit 4 ein Befehl zum Aktiveren/Deaktivieren des Energiespar-Modus zugeführt werden. Folglich kann ein Benutzer von extern den Energiespar-Modus aktiveren und wieder deaktivieren.

Der Steuereinheit 2 können auch Datensätze zur Ausführung des vorstehend beschriebenen erfindungsgemäßen Verfahrens zugeführt werden, welche dann in einem Speicher der Steuereinheit 4 oder einem der Steuereinheit 4 zugeordneten Speicher abgespeichert werden.

Solche Datensätze können wenigstens ein erster Datensatz, der das Verhältnis zwischen dem ersten Effizienzwert des Leuchtmittel-Moduls 3 und der Temperatur tp des Leuchtmittel-Moduls 3 für einen Wert des Leuchtmittel-Stroms I_{L} wiedergibt; mehrere erste Datensätze, die das Verhältnis zwischen dem ersten Effizienzwert und der Temperatur tp für verschiedene Werte des Leuchtmittel-Stroms wiedergeben; sowie wenigstens ein zweiter Datensatz sein, der das Verhältnis zwischen dem zweiten Effizienzwert des Leuchtmittel-Konverters 2 und dem Leuchtmittel-Strom I_{L} wiedergibt.

Alternativ oder zusätzlich kann die Steuereinheit 4 dazu eingerichtet sein, den wenigstens einen ersten Datensatz, die mehreren ersten Datensätze und den wenigstens einen zweiten Datensatz durch ein selbständiges Lernen zu erstellen.

Zusätzlich kann das Beleuchtungssystem 1 einen Lichtsensor aufweisen, der dazu eingerichtet ist, den Lichtstrom des Leuchtmittel-Moduls 3 zu messen und das Messergebnis der Steuereinheit 4 zuzuführen (in Figur 1 nicht gezeigt).

Das Beleuchtungssystem 1, insbesondere der Leuchtmittel-Konverter 2, kann Erfassungseinheiten zum Messen von verschiedenen elektrischen Größen, wie zum Beispiel dem dem Leuchtmittel-Konverter 2 zugeführten Strom, der zugeführten Spannung, dem durch den Leuchtmittel-Konverter 2 abgegebenen Leuchtmittel-Strom I_{L} und der abgegebenen Leuchtmittel-Spannung U_{L}, aufweisen (in Figur 1 nicht gezeigt). Solche Erfassungseinheiten sind jeweils dazu eingerichtet, eine elektrische Größe zu messen und dann das Messergebnis der Steuereinheit 4 zuzuführen. Eine Erfassungseinheit zum Messen eines Stroms kann zum Beispiel ein Shunt-Widerstand bzw. Messwiderstand sein und eine Erfassungseinheit zum Messen einer Spannung kann zum Beispiel ein Spannungsteiler sein. Die vorliegende Erfindung ist aber nicht auf bestimmte Erfassungseinheiten zum Messen von elektrischen Größen beschränkt, und folglich kann hierfür jede dem Fachmann bekannte Erfassungseinheit zum Messen von elektrischen Größen verwendet werden.

Die Steuereinheit 4 ist insbesondere dazu eingerichtet, bei dem Betrieb des Leuchtmittel-Konverters 2 gemäß einem Dimmpegel eine Regelung der die Lichtleistung beeinflussenden Betriebsgröße, wie zum Beispiel des Leuchtmittel-Stroms durchzuführen.

Wenn sich die Steuereinheit 4 im Energiespar-Modus befindet und der Steuereinheit 4 ein Dimmpegel zum Betrieb des Leuchtmittel-Konverters 2 zugeführt wurde, ist die Steuereinheit 4 dazu eingerichtet, einen hinsichtlich der Gesamteffizienz des Beleuchtungssystems optimierten Dimmpegel durch Ausführung des erfindungsgemäßen Verfahrens auszuwerten bzw. zu ermitteln und anschließend eine Regelung der die Lichtleistung beeinflussenden Betriebsgrößen, wie z.B. des Leuchtmittel-Stroms I_{L}, gemäß dem optimierten Dimmpegel durchzuführen.

Zum Beispiel führt die Steuereinheit 4 eine Reglung des Leuchtmittel-Stroms I_{L} durch. Wenn der Energiespar-Modus deaktiviert ist, dann erfolgt diese Regelung mit einem Sollwert für den Leuchtmittel-Strom, der dem der Steuereinheit 4 zugeführten Dimmpegel entspricht. D.h. als Sollwert wird ein Wert des Leuchtmittel-Stroms festgelegt, mit dem eine Lichtabgabe des Leuchtmittel-Moduls 3 gemäß dem zugeführten Dimmpegel erreicht wird. Folglich betreibt dann der Leuchtmittel-Konverter 2 das Leuchtmittel-Modul 3 mit einem dem zugeführten Dimmpegel entsprechenden Leuchtmittel-Strom und das Leuchtmittel-Modul 3 gibt Licht gemäß dem zugeführten Dimmpegel aus.

Wenn der Energiespar-Modus aktiviert ist und folglich die Steuereinheit 4 das erfindungsgemäße Verfahren zur Ermittlung eines gegenüber dem zugeführten Dimmpegel hinsichtlich der Gesamteffizienz des Beleuchtungssystems 1 optimierten Dimmpegels ausführt, dann erfolgt die Regelung des Leuchtmittel-Stroms I_{L} mit einem Sollwert für den Leuchtmittel-Strom I_{L}, der dem optimierten Dimmpegel entspricht. Folglich betreibt dann der Leuchtmittel-Konverter 2 das Leuchtmittel-Modul 3 mit einem dem optimierten Dimmpegel entsprechenden Leuchtmittel-Strom (optimierten Leuchtmittel-Strom) und das Leuchtmittel-Modul 3 gibt Licht gemäß dem optimierten Dimmpegel aus.

Insbesondere kann die Steuereinheit 4 im aktivierten Energiesparmodus, eine Regelung des Leuchtmittel-Strom I_{L} gemäß einem Sollwert für den Leuchtmittel-Strom durchführen, wobei durch eine übergeordnete Regelung die Steuereinheit 4 den Sollwert für den Leuchtmittel-Strom derart ausregelt, dass die Gesamteffizienz des Beleuchtungssystems 1 optimiert bzw. maximiert wird.

**Figur 2** zeigt ein schematisches Flussdiagram einer bevorzugten Ausführungsform des erfindungsgemäßen Verfahrens. Nachfolgend wird diese Ausführungsform beispielhaft mit Bezug auf das Beleuchtungssystem 1 der Figur 1 beschrieben. Diese Ausführungsform der Figur 2 kann aber auch auf anderer erfindungsgemäße Beleuchtungssysteme entsprechend angewendet werden.

Nachfolgend wird angenommen, dass die Steuereinheit 4 sich im Energiespar-Modus befindet (Energiespar-Modus ist aktiviert) und dass der Steuereinheit 4 ein Dimmpegel zur Steuerung des Leuchtmittel-Konverters 2 zugeführt wurde, der nachfolgend als "*vorliegender Dimmpegel*" bezeichnet wird.

Da der Energiespar-Modus aktiviert ist, führt die Steuereinheit 4 das erfindungsgemäße Verfahren durch, um den Leuchtmittel-Konverter 2 gemäß einem hinsichtlich der Gesamteffizienz des Beleuchtungssystems 1 optimierten Dimmpegel zu steuern. Daraus folgt dann, dass der Leuchtmittel-Konverter 2 an einem optimierten Arbeitspunkt der die Lichtleistung beeinflussenden Betriebsgröße, wie zum Beispiel des Leuchtmittel-Stroms I_{L}, durch die Steuereinheit 4 betrieben wird. An diesem optimierten Arbeitspunkt betreibt folglich dann der Leuchtmittel-Konverter 2 das Leuchtmittel-Modul 3 mit dem optimierten Dimmpegel, insbesondere mit einem dem optimierten Dimmpegel entsprechenden Leuchtmittel-Strom (optimierter Leuchtmittel-Strom), sodass die Gesamteffizienz des Beleuchtungssystems optimiert bzw. maximiert ist.

Mit anderen Worten beim Betrieb des Beleuchtungssystems 1, insbesondere des Leuchtmittel-Konverters 2, am optimierten Arbeitspunkt ist das Verhältnis der durch das Beleuchtungssystem 1 abgegebenen Lichtleistung zu der dem Beleuchtungssystem 1, insbesondere dem Leuchtmittel-Konverter 2, zugeführten elektrischen Leistung bzw. Energie optimiert bzw. maximiert.

In einem ersten Verfahrensschritt S201 des erfindungsgemäßen Verfahrens wird durch die Steuereinheit 4 ein Effizienzwert (erster Effizienzwert) des Leuchtmittel-Moduls 3 bei einem Betrieb gemäß dem vorliegenden Dimmpegel auf der Basis der Temperatur tp des Leuchtmittel-Moduls 3 bestimmt, die beim Betrieb gemäß dem vorliegenden Dimmpegel vorliegt. Hierzu betreibt also die Steuereinheit 4 den Leuchtmittel-Konverter 2 gemäß dem vorliegenden Dimmpegel, sodass der Temperatursensor 5 die Temperatur tp des Leuchtmittel-Moduls 3 für den vorliegenden Dimmpegel, d.h. beim Betrieb gemäß dem vorliegenden Dimmpegel, erfassen kann. Beim Betrieb des Leuchtmittel-Konverters 2 gemäß dem vorliegenden Dimmpegel führt der Leuchtmittel-Konverter 2 dem Leuchtmittel-Modul 3 einen dem vorliegenden Dimmpegel entsprechenden Leuchtmittel-Strom I_{L} zu. Der Leuchtmittel-Strom I_{L} wird durch die Steuereinheit 4 zur Steuerung des Leuchtmittel-Konverters 2 erfasst.

Der Temperatursensor 5 erfasst also die Temperatur tp des Leuchtmittel-Moduls 3 für den vorliegenden Dimmpegel. Auf der Basis der erfassten Temperatur tp kann die Steuereinheit 4 den Effizienzwert (erster Effizienzwert) des Leuchtmittel-Moduls 3 für den vorliegenden Dimmpegel bestimmen. Hierzu verwendet die Steuereinheit 4 einen ersten Datensatz, der das Verhältnis zwischen dem Effizienzwert (erster Effizienzwert) des Leuchtmittel-Moduls 3 und der Temperatur tp des Leuchtmittel-Moduls 3 für den dem vorliegenden Dimmpegel entsprechenden Leuchtmittel-Strom I_{L} wiedergibt. Ein solcher erster Datensatz wird beispielhaft in den Figuren 3 und 5 durch entsprechende Kennlinien bzw. Kurven graphisch dargestellt.

Ein Effizienzwert (erster Effizienzwert) des Leuchtmittel-Moduls 3 für einen Dimmpegel ist vorzugsweise der Lichtstrom, der durch das Leuchtmittel-Modul 3 für den Dimmpegel ausgegeben wird. Wie vorstehend ausgeführt, können als Effizienzwert des Leuchtmittel-Moduls 3 auch andere die Lichtleistung des Leuchtmittel-Moduls 3 wiedergebende Größen verwendet werden, die ein Maß für das durch das Leuchtmittel-Modul 3 ausgegebene Licht darstellen können.

In einem zweiten Verfahrensschritt S202 des erfindungsgemäßen Verfahrens wird durch die Steuereinheit 4 ein Effizienzwert (zweiter Effizienzwert) des Leuchtmittel-Konverters 2 bei einem Betrieb gemäß dem vorliegenden Dimmpegel auf der Basis des dem vorliegenden Dimmpegel entsprechenden Leuchtmittel-Stroms bestimmt. Hierzu verwendet die Steuereinheit 4 einen zweiten Datensatz, der das Verhältnis zwischen dem Effizienzwert (zweiter Effizienzwert) des Leuchtmittel-Konverters 2 und dem Leuchtmittel-Strom I_{L} wiedergibt. Ein solcher zweiter Datensatz wird beispielhaft in den Figuren 4 und 6 durch entsprechende Kennlinien bzw. Kurven graphisch dargestellt.

Wie bereits vorstehend ausgeführt, können der erste Datensatz und der zweite Datensatz der Steuereinheit 4 von extern zugeführt werden. Alternativ oder zusätzlich kann die Steuereinheit 4 diese Datensätze durch selbständiges Lernen erstellen.

Gemäß der Figur 2 erfolgt der Verfahrensschritt der Bestimmung des Effizienzwertes des Leuchtmittel-Moduls 3 (Schritt S201) vor dem Verfahrensschritt der Bestimmung des Effizienzwertes des Leuchtmittel-Konverters 2 (Schritt S202). Diese Verfahrensschritte können aber auch in umgekehrter Reihenfolge durchgeführt werden.

In einem dritten Verfahrensschritt S203 wertet die Steuereinheit 4 auf der Basis des im Verfahrensschritt S201 bestimmten Effizienzwertes (erster Effizienzwert) des Leuchtmittel-Moduls 3 für den vorliegenden Dimmpegel und des im Verfahrensschritt S202 bestimmten Effizienzwertes (zweiter Effizienzwert) des Leuchtmittel-Konverters 2 für den vorliegenden Dimmpegel einen hinsichtlich der Gesamteffizienz des Beleuchtungssystems 1 optimierten Dimmpegel innerhalb eines Korridors für den vorliegenden Dimmpegel aus.

Daher ist die Steuereinheit 4 dazu eingerichtet, in einem Korridor bzw. Wertebereich für den vorliegenden Dimmpegel den vorliegenden Dimmpegel zu ändern, um die Gesamteffizienz des Beleuchtungssystems 1 im Vergleich zu der Gesamteffizienz des Beleuchtungssystems 1 beim Betrieb gemäß dem vorliegenden Dimmpegel zu verbessern. Folglich ist die Steuereinheit 4 auch dazu eingerichtet, in einem Korridor bzw. Wertebereich für den dem vorliegenden Dimmpegel entsprechenden Leuchtmittel-Strom den dem vorliegenden Dimmpegel entsprechenden Leuchtmittel-Strom zu ändern, um die Gesamteffizienz des Beleuchtungssystems 1 im Vergleich zu der Gesamteffizienz des Beleuchtungssystems 1 beim Betrieb mit dem dem vorliegenden Dimmpegel entsprechenden Leuchtmittel-Strom zu verbessern

Wie bereits vorstehend ausgeführt, hängt die durch das Leuchtmittel-Modul 3 abgegebene Lichtleistung von dem zugeführten Leuchtmittel-Strom I_{L} (die Lichtleistung beeinflussende Betriebsgröße) ab. Je größer der durch den Leuchtmittel-Konverter 2 dem Leuchtmittel-Modul 3 zugeführte Leuchtmittel-Strom ist, desto größer ist die durch das Leuchtmittel-Modul 3 abgegebene Lichtleistung (und folglich desto größer ist auch der Dimmpegel des Leuchtmittel-Moduls 3).

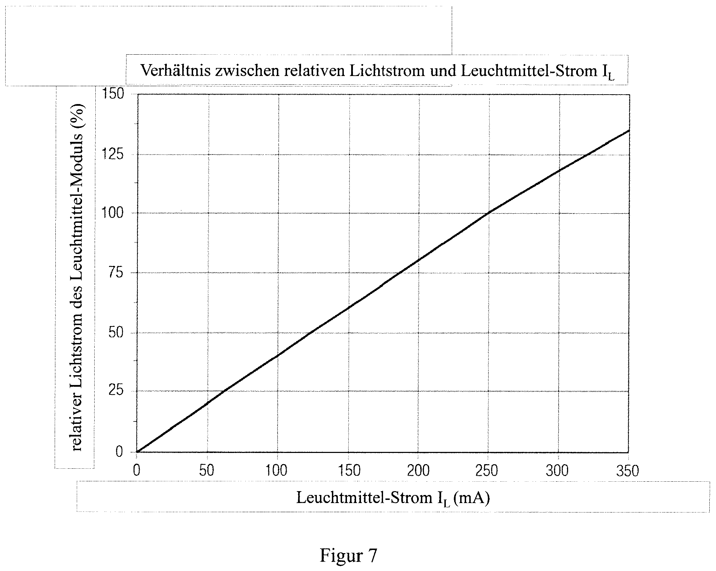

Dieses Verhältnis ist in Figur 7 gezeigt. Die Figur 7 zeigt ein Beispiel für das Verhältnis zwischen dem durch den Leuchtmittel-Modul 3 ausgegebenen relativen Lichtstrom und dem dem Leuchtmittel-Modul 3 zugeführten Leuchtmittel-Strom I_{L}. Die Figur 7 ist insbesondere für ein Leuchtmittel-Modul 3 zutreffend, das als Leuchtmittel wenigstens eine Leuchtdiode aufweist und folglich ein Leuchtdioden-Modul ist. Die vertikale Achse der Figur 7 gibt den relativen Lichtstrom des Leuchtmittel-Moduls 3 in Prozent (%) an und die horizontale Achse der Figur 7 gibt den Leuchtmittel-Strom I_{L} in Milliampere (mA) an. Wie in Figur 7 beispielhaft gezeigt, steigt der relative Lichtstrom mit steigendem Leuchtmittel-Strom I_{L}.

Beim Betrieb mit einem Leuchtmittel-Strom hängt aber der durch das Leuchtmittel-Modul 3 abgegebene Lichtstrom auch von der Temperatur des Leuchtmittel-Moduls 3 ab. Dies ist insbesondere der Fall, wenn das Leuchtmittel-Modul 3 als Leuchtmittel wenigstens eine Leuchtdiode aufweist, d.h. wenn das Leuchtmittel-Modul ein Leuchtdioden-Modul ist. Es gilt dann das folgende Verhältnis zwischen dem Lichtstrom des Leuchtmittel-Moduls 3 und der Temperatur tp des Leuchtmittel-Moduls 3: Je höher die Temperatur tp des Leuchtmittel-Moduls 3 ist, desto kleiner ist der Lichtstrom des Leuchtmittel-Moduls 3. Dieses Verhältnis wird in den Figuren 3 und 5 beispielhaft gezeigt.

Wie bereits vorstehend ausgeführt, hängt die Temperatur tp des Leuchtmittel-Moduls 3 insbesondere von dem Leuchtmittel-Strom I_{L}, mit dem das Leuchtmittel-Modul 3 versorgt wird; von der Umgebungstemperatur sowie von der Kühlung des Leuchtmittel-Moduls 3 ab. Insbesondere mit größer werdendem (steigendem) Leuchtmittel-Strom wird auch die Temperatur tp des Leuchtmittel-Moduls 3 größer und folglich mit kleiner werdendem (fallenden) Leuchtmittel-Strom wird auch die Temperatur tp des Leuchtmittel-Moduls 3 kleiner.

Daher kann der Lichtstrom, insbesondere der relative Lichtstrom, der beim Betrieb des Leuchtmittel-Moduls 3 mit einem Leuchtmittel-Strom durch das Leuchtmittel-Modul 3 abgegeben wird, als ein Maß für die Effizienz des Leuchtmittel-Moduls 3 und somit als Effizienzwert dienen. Da der Steuereinheit 4 der Leuchtmittel-Strom I_{L} bekannt ist, der dem Leuchtmittel-Modul 3 zugeführt wird, kann die Steuereinheit 4 auf der Basis des entsprechenden ersten Datensatzes und der erfassten Temperatur tp des Leuchtmittel-Moduls 3 den Lichtstrom des Leuchtmittel-Moduls 3 als Effizienzwert (erster Effizienzwert) des Leuchtmittel-Moduls 3 bestimmen.

Die Effizienz des Leuchtmittel-Konverters 2 ist ebenfalls von dem Leuchtmittel-Strom I_{L} abhängig. Je größer der durch den Leuchtmittel-Konverter 2 ausgegeben Leuchtmittel-Strom I_{L} ist, desto größer (besser) ist der Effizienzwert (zweite Effizienzwert) bzw. Wirkungsgrad des Leuchtmittel-Konverters 2. Der Effizienzwert des Leuchtmittel-Konverters 2 wird insbesondere durch das Verhältnis der durch den Leuchtmittel-Konverter 2 ausgegebenen elektrischen Leistung Pout zu der dem Leuchtmittel-Konverter 2 eingangsseitig zugeführten elektrischen Leistung Pin angegeben (Effizienzwert des Leuchtmittel-Konverters = Pout/Pin). Das Verhältnis zwischen dem Effizienzwert des Leuchtmittel-Konverters 2 und dem durch den Leuchtmittel-Konverter 2 abgegebenen Leuchtmittel-Strom I_{L} ist beispielhaft in Figuren 4 und 6 gezeigt.

Somit sind sowohl der Effizienzwert (erster Effizienzwert) des Leuchtmittel-Moduls 3 wie auch der Effizienzwert (zweiter Effizienzwert) des Leuchtmittel-Konverters 2 von dem Leuchtmittel-Strom I_{L} und folglich dem Dimmpegel, gemäß dem der Leuchtmittel-Konverter 2 betrieben wird, abhängig.

Folglich wird nun im Verfahrensschritt S203 ein Dimmpegel (optimaler Dimmpegel) innerhalb des Korridors für den vorliegenden Dimmpegel ausgewertet bzw. ermittelt, bei dem die Gesamteffizienz des Beleuchtungssystems optimiert bzw. maximiert ist. Der Korridor für den vorliegenden Dimmpegel und somit für den dem vorliegenden Dimmpegel entsprechenden Leuchtmittel-Strom I_{L} ist derart gewählt, das eine Änderung, insbesondere eine Verkleinerung, des vorliegenden Dimmpegels und folglich des dem vorliegenden Dimmpegel entsprechenden Leuchtmittel-Stroms durch den Benutzer des Beleuchtungssystems 1 toleriert werden kann. Zum Beispiel werden Leuchtmittel-Module oft bei einem Dimmpegel von 100% betrieben, obwohl auch ein Dimmpegel von 70% für die Anwendung ausreichend wäre, in der die Leuchtmittel-Module eingesetzt werden. Folglich wenn in einem solchen Fall der vorliegende Dimmpegel 100% wäre, dann könnte in dem Verfahrensschritt 203 die Auswertung des optimierten Dimmpegels in einem Korridor zwischen einem Dimmpegel von 70% und einem Dimmpegel von 100% erfolgen.

In dem Verfahrensschritt S203 wertet die Steuereinheit 4 insbesondere den ersten Datensatz und den zweiten Datensatz aus, um zu einem hinsichtlich der Gesamteffizienz des Beleuchtungssystems optimierten Dimmpegel zu gelangen. Hierbei ist die Steuereinheit 4 insbesondere dazu eingerichtet, den optimierten Dimmpegel innerhalb des Korridors für den vorliegenden Dimmpegel derart zu wählen, dass die Gesamteffizienz des Beleuchtungssystems 1 beim Betrieb des Leuchtmittel-Konverters 2 durch die Steuereinheit 4 gemäß dem optimierten Dimmpegel im Vergleich zu einem Betrieb des Leuchtmittel-Konverters 2 gemäß dem vorliegenden Dimmpegel optimiert bzw. maximiert ist.

Ferner ist die Steuereinheit 4 vorzugsweise dazu eingerichtet, den optimierten Dimmpegel innerhalb des Korridors für den vorliegenden Dimmpegel derart zu wählen, dass sich beim Betrieb mit dem optimierten Dimmpegel einer der zwei Effizienzwerte, nämlich des Effizienzwertes des Leuchtmittel-Moduls 3 und des Effizienzwertes des Leuchtmittel-Konverters 2, verschlechtert und der andere Effizienzwert dieser zwei Effizienzwerte sich aber verbessert, wobei insgesamt beim Betrieb mit dem optimierten Dimmpegel die Gesamteffizienz des Beleuchtungssystems verbessert wird, insbesondere optimiert bzw. maximiert wird.

Zur Auswertung des optimierten Dimmpegels innerhalb des Korridors für den vorliegenden Dimmpegel ist also die Steuereinheit 4 dazu eingerichtet, den besten Kompromiss zwischen dem Effizienzwert des Leuchtmittel-Moduls 3 und dem Effizienzwert des Leuchtmittel-Konverters 2 zu bestimmen, bei dem dann die Gesamteffizienz des Beleuchtungssystems 1 optimiert bzw. maximiert ist. Hierfür ist die Steuereinheit 4 dazu eingerichtet einen Optimierungsalgorithmus unter Verwendung des ersten und zweiten Datensatzes auszuführen.

Nachdem im Verfahrensschritt S203 der optimierte Dimmpegel bestimmt wurde, steuert im Verfahrensschritt S204 die Steuereinheit 4 den Leuchtmittel-Konverter 2 gemäß dem optimierten Dimmpegel an. Folglich führt der Leuchtmittel-Konverter 2 dem Leuchtmittel-Modul 3 einen dem optimierten Dimmpegel entsprechenden Leuchtmittel-Strom (optimierter Leuchtmittel-Strom) zu. Da sich der optimierte Dimmpegel innerhalb des Korridors für den vorliegenden Dimmpegel befindet und folglich sich der dem optimierten Dimmpegel entsprechende Leuchtmittel-Strom (optimierter Leuchtmittel-Strom) innerhalb des Korridors für den dem vorliegenden Dimmpegel entsprechenden Leuchtmittel-Strom befindet, kann die Änderung des durch das Leuchtmittel-Modul 3 abgegebenen Lichts aufgrund der Änderung des Betriebs des Leuchtmittel-Konverters 2 von einem Betrieb gemäß dem vorliegenden Dimmpegel zu einem Betrieb gemäß dem optimierten Dimmpegel toleriert bzw. vernachlässigt werden.

**Figur 3** zeigt ein Beispiel für das Verhältnis zwischen dem durch ein Leuchtmittel-Modul ausgegebenen relativen Lichtstrom und der Temperatur tp des Leuchtmittel-Moduls für einen dem Leuchtmittel-Modul zugeführten Leuchtmittel-Strom, wobei das Leuchtmittel-Modul durch einen Leuchtmittel-Konverter betrieben wird, für den Figur 4 beispielhaft die Effizienz des Leuchtmittel-Konverters für verschiedene Leuchtmittel-Stromwerte zeigt.

Die vertikale Achse der Figur 3 gibt den relativen Lichtstrom an, der durch das Leuchtmittel-Modul abgegeben wird; und die horizontale Achse der Figur 3 gibt die Temperatur tp des Leuchtmittel-Moduls in Grad Celsius (°C) an. Die in Figur 3 gezeigte Kennlinie gilt insbesondere für ein Leuchtmittel-Modul mit wenigstens einer Leuchtdiode als Leuchtmittel (Leuchtdioden-Modul).

Die **Figur 4** zeigt beispielhaft die Effizienz eines Leuchtmittel-Konverters für verschiedene Werte des durch den Leuchtmittel-Konverter bereitgestellten Leuchtmittel-Stroms I_{L}.

Die vertikalen Achsen der Figur 4 geben die Effizienz Pout/Pin des Leuchtmittel-Konverters an; und die horizontale Achse der Figur 4 gibt den Leuchtmittel-Strom I_{L} in Ampere (A) an. Gemäß der Figur 4 entspricht die Effizienz bzw. der Effizienzwert des Leuchtmittel-Konverters dem Verhältnis der durch den Leuchtmittel-Konverter abgegebenen elektrischen Leistung Pout zu der durch den Leuchtmittel-Konverter aufgenommenen elektrischen Leistung Pin (Effizienzwert des Leuchtmittel-Konverters = Pout/Pin).

Die Figur 4 zeigt zwei Kennlinien K1 und K2, wobei für die Kennlinie K1 die linke vertikale Achse gültig ist und für die Kennlinie K₂ die rechte vertikale Achse gültig ist. Die Kennlinie K2 ist ein vergrößerter Ausschnitt der Kennlinie K1 für den Effizienzbereich zwischen 0,86 (86%) und 0,7 (70%).

Im nachfolgenden wir angenommen, dass der Korridor für den Dimmpegel zwischen 70% und 100% des Dimmpegels liegt. Folglich liegt dann auch der Korridor für den dem Dimmpegel entsprechenden Leuchtmittel-Strom I_{L} zwischen 70% und 100% des dem Dimmpegel entsprechenden Leuchtmittel-Stroms I_{L}. Ferner wird angenommen, dass der Leuchtmittel-Konverter das Leuchtmittel-Modul mit einem ursprünglichen Leuchtmittel-Strom I_{L} von 500 mA betreibt, wobei sich bei diesem Betrieb eine ursprüngliche Temperatur tp des Leuchtmittel-Moduls von 90°C einstellt.

Im Folgenden wird nun eine Optimierung des Leuchtmittel-Stroms und folglich des Dimmpegels hinsichtlich der Gesamteffizienz des Beleuchtungssystems gemäß dem erfindungsgemäßen Verfahrens mit Bezug auf die Figuren 3 und 4 beschrieben.

Gemäß Figur 3 ist zu erkennen, dass bei einer Temperatur von 90°C des Leuchtmittel-Moduls aufgrund eines Betrieb des Leuchtmittel-Moduls mit einem ursprünglichen Leuchtmittel-Strom I_{L} von 500 mA der relative Lichtstrom (der einen Effizienzwert des Leuchtmittel-Moduls darstellt) im Vergleich zu einer Temperatur tp des Leuchtmittel-Moduls von 25°C nur 84% (0,84) beträgt. Würde die Temperatur tp von den 90°C um 20°C auf eine Temperatur von 70°C reduziert werden, dann würde sich gemäß der Figur 3 der relative Lichtstrom von 84% (0,84) auf 89% (0,89) erhöhen. D.h. der Effizienzwert des Leuchtmittel-Moduls würde sich von 84% auf 89% erhöhen (verbessern). Diese Reduzierung der Temperatur um 20°C würde also die Effizienz des Leuchtmittel-Moduls um 5% erhöhen.

Eine Reduzierung der ursprünglichen Temperatur tp des Leuchtmittel-Modul von 90°C auf 70°C entspricht einer Reduzierung der Temperatur tp auf einen Wert, der 78% der ursprünglichen Temperatur tp von 90°C entspricht (70°C/90°C = 0,78 = 78%). Folglich müsste für eine solche Reduzierung der Temperatur tp des Leuchtmittel-Moduls um 20°C der dem Leuchtmittel-Modul zugeführte Leuchtmittel-Strom I_{L} auf einen Wert reduziert werden, der 78% des ursprünglichen Leuchtmittel-Stroms von 500 mA entspricht. D.h. eine Reduzierung des Leuchtmittel-Stroms von 500 mA auf 390 mA (78% von 500 mA = 390 mA) würde eine Reduzierung der ursprünglichen Temperatur ausgehend von 90°C um 20°C auf eine Temperatur von 70°C bewirken.

Folglich würde eine Reduzierung des Leuchtmittel-Stromes von 500 mA auf 390 mA dazu führen, dass das Leuchtmittel-Modul kühler wird und somit effizienter. Mit anderen Worten bei einem Arbeitspunkt von 390 mA wäre das Leuchtmittel-Modul kühler und somit effizienter im Vergleich zu einem Arbeitspunkt von 500 mA.

Wie aus der Figur 4, insbesondere der Kennlinie K2, ersichtlich, beträgt bei einem Betrieb des Leuchtmittel-Moduls durch den Leuchtmittel-Konverter mit dem ursprünglichen Leuchtmittel-Strom von 500 mA (0,5 A) die Effizienz bzw. der Effizienzwert Pout/Pin des Leuchtmittel-Konverters 86% (0,86). Bei einer Reduzierung des Leuchtmittel-Stroms von 500 mA auf 390 mA zur Steigerung der Effizienz des Leuchtmittel-Moduls würde die Effizienz des Leuchtmittel-Konverters sich reduzieren (verschlechtern). Den gemäß der Kennlinie K2 der Figur 4 beträgt der Effizienzwert des Leuchtmittel-Konverters bei einem Leuchtmittel-Strom von 390 mA nur noch 84% (0,84). D.h. bei einer Reduzierung des Leuchtmittel-Strom von ursprünglich 500 mA auf 390 mA reduziert sich (verschlechtert sich) der Effizienzwert des Leuchtmittel-Konverters um 2% von 86% auf 84%.

Folglich bewirkt eine Veränderung, insbesondere Reduzierung, des Leuchtmittel-Stroms I_{L} von ursprünglich 500 mA auf 390 mA eine Erhöhung (Verbesserung) des Effizienzwertes des Leuchtmittel-Moduls um 5% von 84% auf 89% und eine Reduzierung (Verschlechterung) des Effizienzwertes des Leuchtmittel-Konverter um 2% von 86% auf 84%. In Summe wird aber die Gesamteffizienz des Beleuchtungssystems um 3% effizienter, wenn der Leuchtmittel-Strom von 500 mA auf 390 mA reduziert wird.

Die Reduzierung des Leuchtmittel-Stroms von 500 mA auf 390 mA kann hinsichtlich der dadurch verursachten Reduzierung der Lichtabgabe des Leuchtmittel-Moduls toleriert bzw. vernachlässigt werden, da diese Reduzierung innerhalb des Korridors für den ursprünglichen Leuchtmittel-Strom (den dem ursprünglichen Dimmpegel entsprechenden Leuchtmittel-Strom) liegt. Dieser Korridor wurde nämlich derart angenommen, dass er durch einen unteren Grenzwert von 70% des ursprünglichen Leuchtmittel-Stroms (70% von 500 mA = 350 mA) und einen oberen Grenzwert von 100% des ursprünglichen Leuchtmittel-Stroms (500 mA) gebildet wird.

Folglich entspricht der Dimmpegel, bei dem der Leuchtmittel-Strom gleich 390 mA ist, einem hinsichtlich der Gesamteffizienz des Beleuchtungssystems optimierten Dimmpegel gegenüber dem ursprünglichen Dimmpegel, bei dem der Leuchtmittel-Strom gleich 500 mA ist. Denn die leichte Verschlechterung der Effizienz des Leuchtmittel-Konverters wird durch eine überproportionale Steigerung (Verbesserung) der Effizienz des Leuchtmittel-Moduls überkompensiert.

Würde man den Leuchtmittel-Strom noch weiter Reduzieren (unter 390 mA), würde zwar das Leuchtmittel-Modul noch effizienter werden, da hierdurch auch die Temperatur tp weiter reduziert wird und folglich der relative Lichtstrom des Leuchtmittel-Moduls weiter erhöht wird (vgl. Figur 3). Aber wie aus Figur 4 ersichtlich ist, reduziert sich dann die Effizienz des Leuchtmittel-Konverters sehr stark.

Wie vorstehend gezeigt, kann gemäß dem erfindungsgemäßen Verfahren der optimierte Leuchtmittel-Strom innerhalb des Korridors für den Leuchtmittel-Strom und folglich der optimierte Dimmpegel innerhalb des Korridors für den Dimmpegel unter Verwendung eines ersten Datensatzes, der das Verhältnis zwischen dem Effizienzwert des Leuchtmittel-Moduls und der Temperatur tp des Leuchtmittel-Moduls für einen Wert des Leuchtmittel-Stroms wiedergibt, und eines zweiten Datensatzes ausgewertet werden, wobei der zweite Datensatz das Verhältnis zwischen dem Effizienzwert des Leuchtmittel-Konverters und dem Leuchtmittel-Strom wiedergibt. Ein Beispiel für den ersten Datensatz wird durch die Kennlinie der Figur 3 gezeigt und ein Beispiel für den zweiten Datensatz wird durch die Kennlinien K1 und K2 der Figur 4 gezeigt.

**Figur 5** zeigt ein Beispiel für das Verhältnis zwischen dem durch ein Leuchtmittel-Modul ausgegebenen relativen Lichtstrom und der Temperatur tp des Leuchtmittel-Moduls für einen dem Leuchtmittel-Modul zugeführten Leuchtmittel-Strom, wobei das Leuchtmittel-Modul durch einen Leuchtmittel-Konverter betrieben wird, für den Figur 6 beispielhaft die Effizienz des Leuchtmittel-Konverters für verschiedene Leuchtmittel-Stromwerte zeigt.

Die vertikale Achse der Figur 5 gibt den relativen Lichtstrom an, der durch das Leuchtmittel-Modul abgegeben wird; und die horizontale Achse der Figur 5 gibt die Temperatur tp des Leuchtmittel-Moduls in Grad Celsius (°C) an. Die in Figur 5 gezeigte Kennlinie gilt insbesondere für ein Leuchtmittel-Modul mit wenigstens einer Leuchtdiode als Leuchtmittel (Leuchtdioden-Modul).

**Figur 6** zeigt beispielhaft die Effizienz eines Leuchtmittel-Konverters für verschiedene Werte des durch den Leuchtmittel-Konverter bereitgestellten Leuchtmittel-Stroms I_{L}.

Die vertikalen Achsen der Figur 6 geben die Effizienz Pout/Pin des Leuchtmittel-Konverters an; und die horizontale Achse der Figur 6 gibt den Leuchtmittel-Strom I_{L} in Ampere (A) an. Gemäß der Figur 6 entspricht die Effizienz bzw. der Effizienzwert des Leuchtmittel-Konverters dem Verhältnis der durch den Leuchtmittel-Konverter abgegebenen elektrischen Leistung Pout zu der durch den Leuchtmittel-Konverter aufgenommenen elektrischen Leistung Pin (Effizienzwert des Leuchtmittel-Konverters = Pout/Pin).

Die Figur 6 zeigt zwei Kennlinien K3 und K4, wobei für die Kennlinie K3 die linke vertikale Achse gültig ist und für die Kennlinie K4 die rechte vertikale Achse gültig ist. Die Kennlinie K4 ist ein vergrößerter Ausschnitt der Kennlinie K3 für den Effizienzbereich zwischen 0,916 (91,6%) und 0,85 (85%).

Im nachfolgenden wir wieder angenommen, dass der Korridor für den Dimmpegel zwischen 70% und 100% des Dimmpegels liegt. Folglich liegt dann auch der Korridor für den dem Dimmpegel entsprechenden Leuchtmittel-Strom I_{L} zwischen 70% und 100% des dem Dimmpegel entsprechenden Leuchtmittel-Stroms I_{L}. Ferner wird angenommen, dass der Leuchtmittel-Konverter das Leuchtmittel-Modul mit einem ursprünglichen Leuchtmittel-Strom I_{L} von 350 mA betreibt, wobei sich bei diesem Betrieb eine ursprüngliche Temperatur tp des Leuchtmittel-Moduls von 75°C einstellt.

Im Folgenden wird nun eine Optimierung des Leuchtmittel-Stroms und folglich des Dimmpegels hinsichtlich der Gesamteffizienz des Beleuchtungssystems gemäß dem erfindungsgemäßen Verfahrens mit Bezug auf die Figuren 5 und 6 beschrieben.

Gemäß Figur 5 ist zu erkennen, dass bei einer Temperatur von 75°C des Leuchtmittel-Moduls aufgrund eines Betrieb des Leuchtmittel-Moduls mit einem ursprünglichen Leuchtmittel-Strom I_{L} von 350 mA der relative Lichtstrom (der einen Effizienzwert des Leuchtmittel-Moduls darstellt) im Vergleich zu einer Temperatur tp des Leuchtmittel-Moduls von 65°C nur 98,5% (0,985) beträgt. Würde die Temperatur tp von den 75°C um 20°C auf eine Temperatur von 55°C reduziert werden, dann würde sich gemäß der Figur 5 der relative Lichtstrom von 98,5% (0,985) auf 101,5% (1,015) erhöhen. D.h. der Effizienzwert des Leuchtmittel-Moduls würde sich von 98,5% auf 101,5% erhöhen (verbessern). Diese Reduzierung der Temperatur um 20°C würde also die Effizienz des Leuchtmittel-Moduls um 3% erhöhen.

Eine Reduzierung der ursprünglichen Temperatur tp des Leuchtmittel-Modul von 75°C auf 55°C entspricht einer Reduzierung der Temperatur tp auf einen Wert, der 73% der ursprünglichen Temperatur tp von 75°C entspricht (55°C/75°C = 0,73 = 73%). Folglich müsste für eine solche Reduzierung der Temperatur tp des Leuchtmittel-Moduls um 20°C der dem Leuchtmittel-Modul zugeführte Leuchtmittel-Strom I_{L} auf einen Wert reduziert werden, der 73% des ursprünglichen Leuchtmittel-Stroms von 350 mA entspricht. D.h. eine Reduzierung des Leuchtmittel-Stromes von 350 mA auf 256 mA (73% von 350 mA = 256 mA) würde eine Reduzierung der ursprünglichen Temperatur ausgehend von 75°C um 20°C auf eine Temperatur von 55°C bewirken.

Folglich würde eine Reduzierung des Leuchtmittel-Stromes von 350 mA auf 256 mA dazu führen, dass das Leuchtmittel-Modul kühler wird und somit effizienter. Mit anderen Worten bei einem Arbeitspunkt von 256 mA wäre das Leuchtmittel-Modul kühler und somit effizienter im Vergleich zu einem Arbeitspunkt von 350 mA.

Wie aus der Figur 6, insbesondere der Kennlinie K4, ersichtlich, beträgt bei einem Betrieb des Leuchtmittel-Moduls durch den Leuchtmittel-Konverter mit dem ursprünglichen Leuchtmittel-Strom von 350 mA (0,35 A) die Effizienz bzw. der Effizienzwert Pout/Pin des Leuchtmittel-Konverters 91,6% (0,916). Bei einer Reduzierung des Leuchtmittel-Strom von 350 mA auf 256 mA zur Steigerung der Effizienz des Leuchtmittel-Moduls würde die Effizienz des Leuchtmittel-Konverter sich reduzieren (verschlechtern). Den gemäß der Kennlinie K4 der Figur 6 beträgt der Effizienzwert des Leuchtmittel-Konverters bei einem Leuchtmittel-Strom von 256 mA nur noch 91% (0,91). D.h. bei einer Reduzierung des Leuchtmittel-Strom von ursprünglich 350 mA auf 256 mA reduziert sich (verschlechtert sich) der Effizienzwert des Leuchtmittel-Konverters um 0,6% von 91,6% auf 91%.

Folglich bewirkt eine Veränderung, insbesondere Reduzierung, des Leuchtmittel-Stroms I_{L} von ursprünglich 350 mA auf 256 mA eine Erhöhung (Verbesserung) des Effizienzwertes des Leuchtmittel-Moduls um 3% von 98,5% auf 101,5% und eine Reduzierung (Verschlechterung) des Effizienzwertes des Leuchtmittel-Konverters um 0,6% von 91,6% auf 91%. Insgesamt wird aber die Gesamteffizienz des Beleuchtungssystems um 2,4% effizienter, wenn der Leuchtmittel-Strom von 350 mA auf 256 mA reduziert wird.

Die Reduzierung des Leuchtmittel-Stroms von 350 mA auf 256 mA kann hinsichtlich der dadurch verursachten Reduzierung der Lichtabgabe des Leuchtmittel-Moduls toleriert bzw. vernachlässigt werden, da diese Reduzierung innerhalb des Korridors für den ursprünglichen Leuchtmittel-Strom (den dem ursprünglichen Dimmpegel entsprechenden Leuchtmittel-Strom) liegt. Dieser Korridor wurde nämlich derart angenommen, dass er durch einen unteren Grenzwert von 70% des ursprünglichen Leuchtmittel-Stroms (70% von 350 mA = 245 mA) und einen oberen Grenzwert von 100% des ursprünglichen Leuchtmittel-Stroms (350 mA) gebildet wird.

Folglich entspricht der Dimmpegel, bei dem der Leuchtmittel-Strom gleich 256 mA ist, einem hinsichtlich der Gesamteffizienz des Beleuchtungssystems optimierten Dimmpegel gegenüber dem ursprünglichen Dimmpegel, bei dem der Leuchtmittel-Strom gleich 350 mA ist. Denn die leichte Verschlechterung der Effizienz des Leuchtmittel-Konverters wird durch eine überproportionale Steigerung (Verbesserung) der Effizienz des Leuchtmittel-Moduls überkompensiert.

Würde man den Leuchtmittel-Strom noch weiter Reduzieren (unter 256 mA), würde zwar das Leuchtmittel-Modul noch effizienter werden, da hierdurch auch die Temperatur tp weiter reduziert wird und folglich der relative Lichtstrom des Leuchtmittel-Moduls weiter erhöht wird (vgl. Figur 5). Aber wie aus Figur 6 ersichtlich ist, reduziert sich dann die Effizienz des Leuchtmittel-Konverters sehr stark.

Wie vorstehend gezeigt, kann gemäß dem erfindungsgemäßen Verfahren der optimierte Leuchtmittel-Strom innerhalb des Korridors für den Leuchtmittel-Strom und folglich der optimierte Dimmpegel innerhalb des Korridors für den Dimmpegel unter Verwendung eines ersten Datensatzes, der das Verhältnis zwischen dem Effizienzwert des Leuchtmittel-Moduls und der Temperatur tp des Leuchtmittel-Moduls für einen Wert des Leuchtmittel-Stroms wiedergibt, und eines zweiten Datensatzes ausgewertet werden, wobei der zweite Datensatz das Verhältnis zwischen dem Effizienzwert des Leuchtmittel-Konverters und dem Leuchtmittel-Strom wiedergibt. Ein Beispiel für den ersten Datensatz wird durch die Kennlinie der Figur 5 gezeigt und ein Beispiel für den zweiten Datensatz wird durch die Kennlinien K3 und K4 der Figur 6 gezeigt.

## Patentansprüche

1. Verfahren zum Betrieb eines Leuchtmittel-Konverters (2) für wenigstens ein Leuchtmittel-Modul (3), insbesondere wenigstens ein Leuchtdioden-Modul, an einem Arbeitspunkt einer die Lichtleistung beeinflussenden Betriebsgröße für einen Dimmpegel, wobei der Leuchtmittel-Konverter und das wenigstens eine Leuchtmittel-Modul ein Beleuchtungssystem (1) bilden,
wobei das Verfahren die folgenden Schritte aufweist:
- Bestimmen für den Dimmpegel einen ersten Effizienzwert des wenigstens einen Leuchtmittel-Moduls (3),
- Bestimmen für den Dimmpegel einen zweiten Effizienzwert des Leuchtmittel-Konverters (2),
- Auswerten eines hinsichtlich der Gesamteffizienz des Beleuchtungssystems (1) optimierten Dimmpegels innerhalb eines Korridors für den Dimmpegel auf der Basis des ersten Effizienzwertes und des zweiten Effizienzwertes für einen hinsichtlich der Gesamteffizienz des Beleuchtungssystems (1) optimierten Arbeitspunkt der die Lichtleistung beeinflussenden Betriebsgröße, an dem der Leuchtmittel-Konverter (2) das wenigstens eine Leuchtmittel-Modul (3) mit dem optimierten Dimmpegel betreibt.

2. Verfahren gemäß Anspruch 1,
- wobei der zweite Effizienzwert auf der Basis des dem Dimmpegel entsprechenden Leuchtmittel-Stroms bestimmt wird, und
- wobei ein hinsichtlich der Gesamteffizienz des Beleuchtungssystems (1) optimierter Leuchtmittel-Strom innerhalb eines Korridors für den dem Dimmpegel entsprechenden Leuchtmittel-Strom auf der Basis des ersten Effizienzwertes und des zweiten Effizienzwertes für den hinsichtlich der Gesamteffizienz des Beleuchtungssystems (1) optimierten Arbeitspunkt der die Lichtleistung beeinflussenden Betriebsgröße ausgewertet wird, an dem der Leuchtmittel-Konverter (2) das wenigstens eine Leuchtmittel-Modul (3) mit dem optimierten Leuchtmittel-Strom betreibt.

3. Verfahren gemäß einem der vorhergehenden Ansprüche,
- wobei der erste Effizienzwert der durch das wenigstens eine Leuchtmittel-Modul (3) ausgegebene relative Lichtstrom ist.

4. Verfahren gemäß einem der vorhergehenden Ansprüche,
- wobei der zweite Effizienzwert das Verhältnis der durch den Leuchtmittel-Konverter abgegebenen elektrischen Leistung (Pout) zu der durch den Leuchtmittel-Konverter (2) aufgenommenen elektrischen Leistung (Pin) ist.

5. Verfahren gemäß einem der vorhergehenden Ansprüche,
- wobei der Korridor für den Dimmpegel bzw. für den dem Dimmpegel entsprechenden Leuchtmittel-Strom (I_{L}) durch einen unteren Grenzwert und einen oberen Grenzwert für den Dimmpegel bzw. für den Leuchtmittel-Strom festgelegt ist, und
- wobei vorzugsweise der untere Grenzwert 70% des Dimmpegels bzw. des dem Dimmpegel entsprechenden Leuchtmittel-Stroms (I_{L}) und der obere Grenzwert 100% des Dimmpegels bzw. des dem Dimmpegel entsprechenden Leuchtmittel-Stroms (I_{L}) entspricht.

6. Verfahren gemäß einem der vorhergehenden Ansprüche, wobei
- die durch den Leuchtmittel-Konverter (2) aufgenommene elektrische Leistung (Pin) erfasst wird, und/oder
- die durch den Leuchtmittel-Konverter (2) abgegebene Leistung (Pout), insbesondere auf der Basis des durch den Leuchtmittel-Konverter abgegebenen Leuchtmittel-Stroms (I_{L}) und Leuchtmittel-Spannung (U_{L}), erfasst wird.

7. Verfahren gemäß einem der vorhergehenden Ansprüche, wobei
- der erste Effizienzwert, insbesondere der durch das wenigstens eine Leuchtmittel-Modul (3) ausgegebene Lichtstrom, unter Verwendung wenigstens eines Lichtsensors gemessen wird.

8. Verfahren gemäß einem der vorstehenden Ansprüche, wobei
- der erste Effizienzwert des wenigstens einen Leuchtmittel-Moduls (3) auf der Basis der Temperatur (tp) des wenigstens einen Leuchtmittel-Moduls (3) bestimmt wird, die beim Betrieb des wenigstens einen Leuchtmittel-Moduls (3) durch den Leuchtmittel-Konverter (2) mit dem Dimmpegel vorliegt;
- insbesondere wobei der erste Effizienzwert auf der Basis der Temperatur (tp) des wenigstens einen Leuchtmittel-Moduls (3) bestimmt wird, die beim Betrieb des wenigstens einen Leuchtmittel-Moduls (3) mit dem dem Dimmpegel entsprechenden Leuchtmittel-Strom vorliegt,
wobei vorzugsweise
- die Temperatur (tp) des wenigstens einen Leuchtmittel-Moduls (3) bei dem Dimmpegel, insbesondere unter Berücksichtigung der Umgebungstemperatur, auf der Basis des dem Dimmpegel entsprechenden Leuchtmittel-Stroms erfasst wird,
wobei vorzugsweise
- die Temperatur (tp) des wenigstens einen Leuchtmittel-Moduls (3) unter Verwendung wenigstens eines Temperatursensors (5) gemessen wird.

9. Verfahren gemäß Anspruch 8, wobei
- der optimierte Dimmpegel bzw. optimierte Leuchtmittel-Strom innerhalb des Korridors für den Dimmpegel bzw. für den dem Dimmpegel entsprechenden Leuchtmittel-Strom unter Verwendung wenigstens eines ersten Datensatzes und wenigstens eines zweiten Datensatzes ausgewertet wird;
- wobei der wenigstens eine erste Datensatz das Verhältnis zwischen dem ersten Effizienzwert und der Temperatur (tp) des wenigstens einen Leuchtmittel-Moduls (3) für einen Wert des Leuchtmittel-Stroms (I_{L}) wiedergibt, und
- der wenigstens eine zweite Datensatz das Verhältnis zwischen dem zweiten Effizienzwert und dem Leuchtmittel-Strom (I_{L}) wiedergibt,
wobei vorzugsweise
- der optimierte Dimmpegel bzw. optimierte Leuchtmittel-Strom innerhalb des Korridors für den Dimmpegel bzw. für den dem Dimmpegel entsprechenden Leuchtmittel-Strom unter Verwendung mehrerer erster Datensätze und des wenigstens einen zweiten Datensatzes ausgewertet wird;
- wobei die mehreren ersten Datensätze das Verhältnis zwischen dem ersten Effizienzwert und der Temperatur (tp) des wenigstens einen Leuchtmittel-Moduls (3) für verschiedene Werte des Leuchtmittel-Stroms (I_{L}) wiedergeben,
wobei vorzugsweise
- der wenigstens eine erste Datensatz bzw. die mehreren ersten Datensätze und/oder der wenigstens eine zweite Datensatz bereitgestellt werden; oder
- der wenigstens eine erste Datensatz bzw. die mehreren ersten Datensätze und/oder der wenigstens eine zweite Datensatz durch selbständiges Lernen des Beleuchtungssystems (1) erstellt werden.

10. Beleuchtungssystem (1) aufweisend,
- wenigstens ein Leuchtmittel-Modul (3), insbesondere wenigstens ein Leuchtdioden-Modul,
- einen Leuchtmittel-Konverter (2), insbesondere einen Leuchtdioden-Konverter, der zum Betreiben des wenigstens einen Leuchtmittel-Moduls (3) eingerichtet ist, und
- eine Steuereinheit (4), die dazu eingerichtet ist, den Leuchtmittel-Konverter (2) auf der Basis eines Dimmpegels zu steuern sowie in einem Energiespar-Modus das Verfahren gemäß einem der vorhergehenden Ansprüche auszuführen,
- wobei insbesondere die Steuereinheit (4) ein Bestandteil des Leuchtmittel-Konverters (2) ist.

11. Beleuchtungssystem (1) gemäß Anspruch 10,
- wobei, wenn der Energiespar-Modus der Steuereinheit (4) deaktiviert ist, die Steuereinheit (4) dazu eingerichtet ist, den Leuchtmittel-Konverter (2) gemäß dem Dimmpegel zu steuern, sodass der Leuchtmittel-Konverter (2) dem wenigstens einen Leuchtmittel-Modul (3) einen dem Dimmpegel entsprechenden Leuchtmittel-Strom zuführt; und
- wobei, wenn der Energiespar-Modus der Steuereinheit (4) aktiviert ist, die Steuereinheit (4) dazu eingerichtet ist, das Verfahren gemäß einem der Ansprüche 1 bis 13 auszuführen und folglich den Leuchtmittel-Konverter (2) gemäß dem hinsichtlich der Gesamteffizienz des Beleuchtungssystems (1) optimierten Dimmpegel zu steuern, sodass der Leuchtmittel-Konverter (2) dem wenigstens einen Leuchtmittel-Modul (3) einen dem optimierten Dimmpegel entsprechenden Leuchtmittel-Strom zuführt.

12. Beleuchtungssystem (1) gemäß Anspruch 10 oder 11,
- wobei die Steuereinheit (4) dazu eingerichtet ist, in dem Energiespar-Modus das Verfahren gemäß einem der Ansprüche 1 bis 9 fortlaufend, insbesondere periodisch, zu wiederholen.

13. Beleuchtungssystem (1) gemäß einem der Anspruch 11 oder 12,
- wobei die Steuereinheit (4) dazu eingerichtet ist, durch einen externen Befehl in den Energiespar-Modus versetzt zu werden.

14. Beleuchtungssystem (1) gemäß einem der Ansprüche 11 bis 13, aufweisend
- wenigstens einen Temperatursensor (5), der dazu eingerichtet ist, die Temperatur (tp) des wenigstens einen Leuchtmittel-Moduls (3) zu messen und das Messergebnis der Steuereinheit (4) zuzuführen; und/oder
- wenigstens einen Lichtsensor, der dazu eingerichtet ist, den Lichtstrom des Leuchtmittel-Moduls zu messen und das Messergebnis der Steuereinheit (4) zuzuführen.

15. Beleuchtungssystem (1) gemäß einem der Ansprüche 11 bis 14,
- wobei die Steuereinheit (4) dazu eingerichtet ist, wenigstens einen ersten Datensatz bzw. mehrere erste Datensätze gemäß Anspruch 9 und/oder wenigstens einen zweiten Datensatz gemäß Anspruch 9 von extern zugeführt zu bekommen; und/oder
- wobei die Steuereinheit (4) dazu eingerichtet ist, den wenigstens einen ersten Datensatz bzw. die mehreren erste Datensätze und/oder den wenigstens einen zweiten Datensatz durch selbständiges Lernen zu erstellen.

## Claims

1. Method for operating a lamp converter (2) for at least one lamp module (3), in particular at least one light-emitting diode module, at a work point of an operating variable, influencing the light output, for a dimming level, wherein the lamp converter and the at least one lamp module form a lighting system (1),
wherein the method comprises the following steps:
- determining a first efficiency value of the at least one lamp module (3) for the dimming level,
- determining a second efficiency value of the lamp converter (2) for the dimming level,
- evaluating a dimming level, which is optimized with regard to the overall efficiency of the lighting system (1), within a range for the dimming level on the basis of the first efficiency value and the second efficiency value for a work point of the operating variable influencing the light output which is optimized with regard to the overall efficiency of the lighting system (1), at which work point the lamp converter (2) operates the at least one lamp module (3) with the optimized dimming level.

2. Method according to claim 1,
- wherein the second efficiency value is determined on the basis of the lamp current corresponding to the dimming level, and
- wherein a lamp current optimized with regard to the overall efficiency of the lighting system (1), within a range for the lamp current corresponding to the dimming level, is evaluated on the basis of the first efficiency value and the second efficiency value for the work point of the operating variable influencing the light output which is optimized with regard to the overall efficiency of the lighting system (1), at which work point the lamp converter (2) operates the at least one lamp module (3) with the optimized lamp current.

3. Method according to any one of the preceding claims,
- wherein the first efficiency value is the relative luminous flux emitted by the at least one lamp module (3).

4. Method according to any one of the preceding claims,
- wherein the second efficiency value is the ratio of the electrical power (Pout) output by the lamp converter to the electrical power (Pin) consumed by the lamp converter (2).

5. Method according to any one of the preceding claims,
- wherein the range for the dimming level or for the lamp current (I_{L}) corresponding to the dimming level is defined by a lower limit and an upper limit for the dimming level or for the lamp current, and
- wherein preferably the lower limit corresponds to 70% of the dimming level or the lamp current (I_{L}) corresponding to the dimming level and the upper limit corresponds to 100% of the dimming level or the lamp current (I_{L}) corresponding to the dimming level.

6. Method according to any one of the preceding claims, wherein
- the electrical power (Pin) consumed by the lamp converter (2) is recorded, and/or
- the power (Pout) output by the lamp converter (2) is recorded, in particular on the basis of the lamp current (I_{L}) and lamp voltage (U_{L}) output by the lamp converter.

7. Method according to any one of the preceding claims, wherein
- the first efficiency value, in particular the luminous flux emitted by the at least one lamp module (3), is measured using at least one light sensor.

8. Method according to any one of the preceding claims, wherein
- the first efficiency value of the at least one lamp module (3) is determined on the basis of the temperature (tp) of the at least one lamp module (3) which prevails during operation of the at least one lamp module (3) by the lamp converter (2) with the dimming level;
- in particular wherein the first efficiency value is determined on the basis of the temperature (tp) of the at least one lamp module (3) which prevails during operation of the at least one lamp module (3) with the lamp current corresponding to the dimming level,
wherein preferably
- the temperature (tp) of the at least one lamp module (3) at the dimming level is recorded, in particular taking into account the ambient temperature, on the basis of the lamp current corresponding to the dimming level,
wherein preferably
- the temperature (tp) of the at least one lamp module (3) is measured using at least one temperature sensor (5).

9. Method according to claim 8, wherein
- the optimized dimming level or optimized lamp current within the range for the dimming level or for the lamp current corresponding to the dimming level is evaluated using at least one first data set and at least one second data set;
- wherein the at least one first data set represents the ratio between the first efficiency value and the temperature (tp) of the at least one lamp module (3) for a value of the lamp current (I_{L}) and
- the at least one second data set represents the ratio between the second efficiency value and the lamp current (I_{L}),
wherein preferably
- the optimized dimming level or optimized lamp current within the range for the dimming level or for the lamp current corresponding to the dimming level is evaluated using a plurality of first data sets and the at least one second data set;
- wherein the plurality of first data sets represent the ratio between the first efficiency value and the temperature (tp) of the at least one lamp module (3) for different values of the lamp current (I_{L}),
wherein preferably
- the at least one first data set or the plurality of first data sets and/or the at least one second data set are provided; or
- the at least one first data set or the plurality of first data sets and/or the at least one second data set are created by independent learning of the lighting system (1).

10. Lighting system (1) comprising,
- at least one lamp module (3), in particular at least one light-emitting diode module,
- a lamp converter (2), in particular a light-emitting diode converter, which is designed to operate the at least one lamp module (3), and
- a control unit (4) which is designed to control the lamp converter (2) on the basis of a dimming level and to carry out the method according to any one of the preceding claims in an energy-saving mode,
- wherein in particular the control unit (4) is a component of the lamp converter (2).

11. Lighting system (1) according to claim 10,
- wherein, when the energy saving mode of the control unit (4) is deactivated, the control unit (4) is designed to control the lamp converter (2) according to the dimming level, so that the lamp converter (2) supplies the at least one lamp module (3) with a lamp current corresponding to the dimming level; and
- wherein, when the energy saving mode of the control unit (4) is activated, the control unit (4) is designed to carry out the method according to any one of claims 1 to 13 and consequently to control the lamp converter (2) according to the dimming level optimized with regard to the overall efficiency of the lighting system (1), so that the lamp converter (2) supplies the at least one lamp module (3) with a lamp current corresponding to the optimized dimming level.

12. Lighting system (1) according to claim 10 or 11,
- wherein the control unit (4) is designed to repeat the method according to any one of claims 1 to 11 continuously, in particular periodically, in the energy saving mode.

13. Lighting system (1) according to any one of claims 11 or 12,
- wherein the control unit (4) is designed to be put into the energy saving mode by an external command.

14. Lighting system (1) according to any one of claims 11 to 13, comprising
- at least one temperature sensor (5) which is designed to measure the temperature (tp) of the at least one lamp module (3) and to supply the measurement result to the control unit (4); and/or
- at least one light sensor which is designed to measure the luminous flux of the lamp module and to supply the measurement result to the control unit (4).

15. Lighting system (1) according to any one of claims 11 to 14,
- wherein the control unit (4) is designed to receive at least one first data set or a plurality of first data sets according to claim 9 and/or at least one second data set according to claim 9 from an external source; and/or
- wherein the control unit (4) is designed to create the at least one first data set or the plurality of first data sets and/or the at least one second data set by independent learning.

## Revendications

1. Procédé destiné à faire fonctionner un convertisseur de moyen d'éclairage (2) pour au moins un module de moyen d'éclairage (3), en particulier au moins un module de diodes électroluminescentes, à un point de fonctionnement d'une grandeur de fonctionnement influençant la puissance lumineuse pour un niveau de gradation, dans lequel le convertisseur de moyen d'éclairage et l'au moins un module de moyen d'éclairage forment un système d'éclairage (1),
dans lequel le procédé présente les étapes suivantes :
- détermination pour le niveau de gradation d'une première valeur d'efficacité de l'au moins un module de moyen d'éclairage (3),
- détermination pour le niveau de gradation d'une seconde valeur d'efficacité du convertisseur de moyen d'éclairage (2),
- évaluation d'un niveau de gradation optimisé par rapport à l'efficacité globale du système d'éclairage (1) à l'intérieur d'un corridor pour le niveau de gradation sur la base de la première valeur d'efficacité et de la seconde valeur d'efficacité pour un point de fonctionnement optimisé par rapport à l'efficacité globale du système d'éclairage (1) de la grandeur de fonctionnement influençant la puissance lumineuse, auquel le convertisseur de moyen d'éclairage (2) fait fonctionner l'au moins un module de moyen d'éclairage (3) avec le niveau de gradation optimisé.

2. Procédé selon la revendication 1,
- dans lequel la seconde valeur d'efficacité est déterminée sur la base du courant de moyen d'éclairage correspondant au niveau de gradation, et
- dans lequel un courant de moyen d'éclairage optimisé par rapport à l'efficacité globale du système d'éclairage (1) est évalué à l'intérieur d'un corridor pour le courant de moyen d'éclairage correspondant au niveau de gradation sur la base de la première valeur d'efficacité et de la seconde valeur d'efficacité pour le point de fonctionnement optimisé par rapport à l'efficacité globale du système d'éclairage (1) de la grandeur de fonctionnement influençant la puissance lumineuse, auquel le convertisseur de moyen d'éclairage (2) fait fonctionner l'au moins un module de moyen d'éclairage (3) avec le courant de moyen d'éclairage optimisé.

3. Procédé selon l'une des revendications précédentes,
- dans lequel la première valeur d'efficacité est le courant lumineux relatif émis par l'au moins un module de moyen d'éclairage (3).

4. Procédé selon l'une des revendications précédentes,
- dans lequel la seconde valeur d'efficacité est le rapport entre la puissance électrique (Pout) délivrée par le convertisseur de moyen d'éclairage et la puissance électrique (Pin) consommée par le convertisseur de moyen d'éclairage (2).

5. Procédé selon l'une des revendications précédentes,
- dans lequel le corridor pour le niveau de gradation ou pour le courant de moyen d'éclairage (I_{L}) correspondant au niveau de gradation est défini par une valeur limite inférieure et une valeur limite supérieure pour le niveau de gradation ou pour le courant de moyen d'éclairage, et
- dans lequel la valeur limite inférieure correspond de préférence à 70 % du niveau de gradation ou du courant de moyen d'éclairage (I_{L}) correspondant au niveau de gradation et la valeur limite supérieure correspond à 100 % du niveau de gradation ou du courant de moyen d'éclairage (I_{L}) correspondant au niveau de gradation.

6. Procédé selon l'une des revendications précédentes, dans lequel
- la puissance électrique (Pin) absorbée par le convertisseur de moyen d'éclairage (2) est détectée, et/ou
- la puissance (Pout) délivrée par le convertisseur de moyen d'éclairage (2) est détectée, en particulier sur la base du courant de moyen d'éclairage (I_{L}) et de la tension de moyen d'éclairage (U_{L}) délivrés par le convertisseur de moyen d'éclairage.

7. Procédé selon l'une des revendications précédentes, dans lequel
- la première valeur d'efficacité, en particulier le courant lumineux émis par l'au moins un module de moyen d'éclairage (3), est mesurée à l'aide d'au moins un capteur de lumière.

8. Procédé selon l'une des revendications précédentes, dans lequel
- la première valeur d'efficacité de l'au moins un module de moyen d'éclairage (3) est déterminée sur la base de la température (tp) de l'au moins un module de moyen d'éclairage (3) qui est présente lors du fonctionnement de l'au moins un module de moyen d'éclairage (3) par le convertisseur de moyen d'éclairage (2) avec le niveau de gradation ;
- en particulier dans lequel la première valeur d'efficacité est déterminée sur la base de la température (tp) de l'au moins un module de moyen d'éclairage (3) qui est présente lors du fonctionnement de l'au moins un module de moyen d'éclairage (3) avec le courant de moyen d'éclairage correspondant au niveau de gradation,
dans lequel, de préférence
- la température (tp) de l'au moins un module de moyen d'éclairage (3) au niveau de gradation, en particulier en tenant compte de la température ambiante, est détectée sur la base du courant de moyen d'éclairage correspondant au niveau de gradation,
dans lequel, de préférence
- la température (tp) de l'au moins un module de moyen d'éclairage (3) est mesurée à l'aide d'au moins un capteur de température (5).

9. Procédé selon la revendication 8, dans lequel
- le niveau de gradation optimisé ou le courant de moyen d'éclairage optimisé est évalué à l'intérieur du corridor pour le niveau de gradation ou pour le courant de moyen d'éclairage correspondant au niveau de gradation à l'aide d'au moins un premier jeu de données et d'au moins un second jeu de données ;
- dans lequel l'au moins un premier jeu de données représente le rapport entre la première valeur d'efficacité et la température (tp) de l'au moins un module de moyen d'éclairage (3) pour une valeur du courant de moyen d'éclairage (I_{L}), et
- l'au moins un second jeu de données représente le rapport entre la seconde valeur d'efficacité et le courant moyen d'éclairage (I_{L}),
dans lequel, de préférence
- le niveau de gradation optimisé ou le courant de moyen d'éclairage optimisé est évalué à l'intérieur du corridor pour le niveau de gradation ou pour le courant de moyen d'éclairage correspondant au niveau de gradation à l'aide de plusieurs premiers jeux de données et de l'au moins un second jeu de données ;
- dans lequel les plusieurs premiers jeux de données représentent la relation entre la première valeur d'efficacité et la température (tp) de l'au moins un module de moyen d'éclairage (3) pour différentes valeurs du courant de moyen d'éclairage (I_{L}),
dans lequel, de préférence
- l'au moins un premier jeu de données ou les plusieurs premiers jeux de données et/ou l'au moins un second jeu de données sont fournis ; ou
- l'au moins un premier jeu de données ou les plusieurs premiers jeux de données et/ou l'au moins un second jeu de données sont établis par apprentissage autonome du système d'éclairage (1).

10. Système d'éclairage (1) présentant,
- au moins un module de moyen d'éclairage (3), en particulier au moins un module de diodes électroluminescentes,
- un convertisseur de moyen d'éclairage (2), en particulier un convertisseur de diodes électroluminescentes, qui est conçu pour faire fonctionner l'au moins un module de moyen d'éclairage (3), et
- une unité de commande (4) qui est conçue pour commander le convertisseur de moyen d'éclairage (2) sur la base d'un niveau de gradation, ainsi que pour mettre en œuvre, dans un mode d'économie d'énergie, le procédé selon l'une des revendications précédentes,
- dans lequel, en particulier, l'unité de commande (4) est un élément constitutif du convertisseur de moyen d'éclairage (2).

11. Système d'éclairage (1) selon la revendication 10,
- dans lequel, lorsque le mode d'économie d'énergie de l'unité de commande (4) est désactivé, l'unité de commande (4) est conçue pour commander le convertisseur de moyen d'éclairage (2) selon le niveau de gradation, de sorte que le convertisseur de moyen d'éclairage (2) alimente à l'au moins un module de moyen d'éclairage (3) un courant de moyen d'éclairage correspondant au niveau de gradation ; et
- dans lequel, lorsque le mode d'économie d'énergie de l'unité de commande (4) est activé, l'unité de commande (4) est conçue pour mettre en œuvre le procédé selon l'une des revendications 1 à 13 et, par conséquent, pour commander le convertisseur de moyen d'éclairage (2) selon le niveau de gradation optimisé par rapport à l'efficacité globale du système d'éclairage (1), de sorte que le convertisseur de moyen d'éclairage (2) alimente à l'au moins un module de moyen d'éclairage (3) un courant de moyen d'éclairage correspondant au niveau de gradation optimisé.

12. Système d'éclairage (1) selon la revendication 10 ou 11,
- dans lequel l'unité de commande (4) est conçue pour répéter en continu, notamment périodiquement, dans le mode d'économie d'énergie, le procédé selon l'une des revendications 1 à 11.

13. Système d'éclairage (1) selon l'une des revendications 11 ou 12,
- dans lequel l'unité de commande (4) est conçue pour être placée dans le mode d'économie d'énergie par un ordre externe.

14. Système d'éclairage (1) selon l'une des revendications 11 à 13, présentant
- au moins un capteur de température (5) qui est conçu pour mesurer la température (tp) de l'au moins un module de moyen d'éclairage (3) et pour alimenter le résultat de mesure à l'unité de commande (4) ; et/ou
- au moins un capteur de lumière qui est conçu pour mesurer le flux lumineux du module de moyen d'éclairage et pour alimenter le résultat de mesure à l'unité de commande (4).

15. Système d'éclairage (1) selon l'une des revendications 11 à 14,
- dans lequel l'unité de commande (4) est conçue pour recevoir de l'extérieur au moins un premier jeu de données ou plusieurs premiers jeux de données selon la revendication 9 et/ou au moins un second jeu de données selon la revendication 9 ; et/ou
- dans lequel l'unité de commande (4) est conçue pour générer l'au moins un premier jeu de données ou les plusieurs premiers jeux de données et/ou l'au moins un second jeu de données par apprentissage autonome.
